(19) Europäisches Patentamt
European Patent Office
Office européen des brevets

(11) **EP 3 698 542 B1**

(12) **EUROPEAN PATENT SPECIFICATION**

(45) Date of publication and mention of the grant of the patent:
**21.12.2022 Bulletin 2022/51**

(21) Application number: **17804315.4**

(22) Date of filing: **25.10.2017**

(51) International Patent Classification (IPC):
**H04N 19/117** *(2014.01)*    **H04N 19/82** *(2014.01)*
**H04N 19/176** *(2014.01)*

(52) Cooperative Patent Classification (CPC):
**H04N 19/117; H04N 19/176; H04N 19/82**

(86) International application number:
**PCT/RU2017/000779**

(87) International publication number:
**WO 2019/083388 (02.05.2019 Gazette 2019/18)**

(54) **IN-LOOP FILTER APPARATUS, METHOD AND COMPUTER PROGRAM PRODUCT FOR VIDEO CODING**

VORRICHTUNG, VERFAHREN UND COMPUTERPROGRAMM ZUR FILTERUNG IN EINER PRÄDIKTIONSSCHLEIFE ZUR VIDEOKODIERUNG

APPAREIL DE FILTRAGE EN BOUCLE, PROCÉDÉ ET PRODUIT DE PROGRAMME INFORMATIQUE DE CODAGE VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.08.2020 Bulletin 2020/35**

(73) Proprietor: **Huawei Technologies Co., Ltd.**
**Longgang District**
**Shenzhen, Guangdong 518129 (CN)**

(72) Inventors:
• **STEPIN, Victor Alexeevich**
  **Shenzhen**
  **Guangdong 518129 (CN)**
• **PASECHNIK, Igor Igorevich**
  **Shenzhen**
  **Guangdong 518129 (CN)**
• **IKONIN, Sergey Yurievich**
  **Shenzhen**
  **Guangdong 518129 (CN)**
• **CHERNYAK, Roman Igorevich**
  **Shenzhen**
  **Guangdong 518129 (CN)**

(74) Representative: **Gill Jennings & Every LLP**
**The Broadgate Tower**
**20 Primrose Street**
**London EC2A 2ES (GB)**

(56) References cited:
**WO-A1-2017/133660**

• **DABOV K ET AL: "Image Denoising by Sparse 3-D Transform-Domain Collaborative Filtering", IEEE TRANSACTIONS ON IMAGE PROCESSING, IEEE SERVICE CENTER, PISCATAWAY, NJ, US, vol. 16, no. 8, 1 August 2007 (2007-08-01), pages 2080-2095, XP011485829, ISSN: 1057-7149, DOI: 10.1109/TIP.2007.901238**

**Description**

TECHNICAL FIELD

The present invention relates to the field of video coding. More specifically, the invention relates to an in-loop filter apparatus and method for filtering reconstructed video frames as well as an encoding apparatus and a decoding apparatus comprising such an in-loop filter apparatus.

BACKGROUND

Digital video communication and storage applications are implemented by a wide range of digital devices, e.g. digital cameras, cellular radio telephones, laptops, broadcasting systems, video teleconferencing systems, etc. One of the most important and challenging tasks of these applications is video compression. The task of video compression is complex and is constrained by two contradicting parameters: compression efficiency and computational complexity. Video coding standards, such as ITU-T H.264/AVC or ITU-T H.265/HEVC, provide a good tradeoff between these parameters. For that reason support of video coding standards is a mandatory requirement for almost any video compression application.

The state-of-the-art video coding standards are based on partitioning of a source frame or picture into frame or picture blocks. Processing of these blocks depend on their size, spatial position and a coding mode specified by an encoder. Coding modes can be classified into two groups according to the type of prediction: intra- and inter-prediction modes. Intra-prediction modes use pixels of the same frame (also referred to as picture or image) to generate reference samples to calculate the prediction values for the pixels of the block being reconstructed. Intra-prediction is also referred to as spatial prediction. Inter-prediction modes are designed for temporal prediction and uses reference samples of previous or next frames to predict pixels of the block of the current frame. After a prediction stage, transform coding is performed for a prediction error that is the difference between an original signal and its prediction. Then, the transform coefficients and side information are encoded using an entropy coder (e.g., CABAC for AVC/H.264 and HEVC/H.265). The recently adopted ITU-T H.265/HEVC standard (ISO/IEC 23008-2:2013, "Information technology - High efficiency coding and media delivery in heterogeneous environments - Part 2: High efficiency video coding", November 2013) declares a set of state-of-the-art video coding tools that provide a reasonable tradeoff between coding efficiency and computational complexity. An overview on the ITU-T H.265/HEVC standard has been given by Gary J. Sullivan, "Overview of the High Efficiency Video Coding (HEVC) Standard", in IEEE Transactions on Circuits and Systems for Video Technology, Vol. 22, No. 12, December 2012, the entire content of which is incorporated herein by reference.

Similarly to the ITU-T H.264/AVC video coding standard, the HEVC/H.265 video coding standard provides for a division of the source frame into frame blocks in the form of so-called coding units (CUs). Each of the CUs can be further split into either smaller CUs or prediction units (PUs). A PU can be intra- or inter-predicted according to the type of processing applied for the pixels of PU. In case of inter-prediction, a PU represents an area of pixels that is processed by motion compensation using a motion vector specified for a PU. For intra prediction, the adjacent pixels of neighbor blocks are used as reference samples to predict a current block. A PU specifies a prediction mode that is selected from the set of intra-prediction modes for all the transform units (TUs) contained in this PU. A TU can have different sizes (e.g., 4x4, 8x8, 16x16 and 32x32 pixels) and can be processed in different ways. For a TU, transform coding is performed, i.e. the prediction error is transformed with a discrete cosine transform or a discrete sine transform (in the HEVC/H.265 standard, it is applied to intra-coded blocks) and quantized. Hence, reconstructed pixels contain quantization noise (it can become apparent, for examples, as blockiness between units, ringing artifacts along with sharp edges, etc.) that in-loop filters such as Deblocking Filter (DBF), Sample Adaptive Offset (SAO) and Adaptive Loop Filter (ALF) try to suppress.

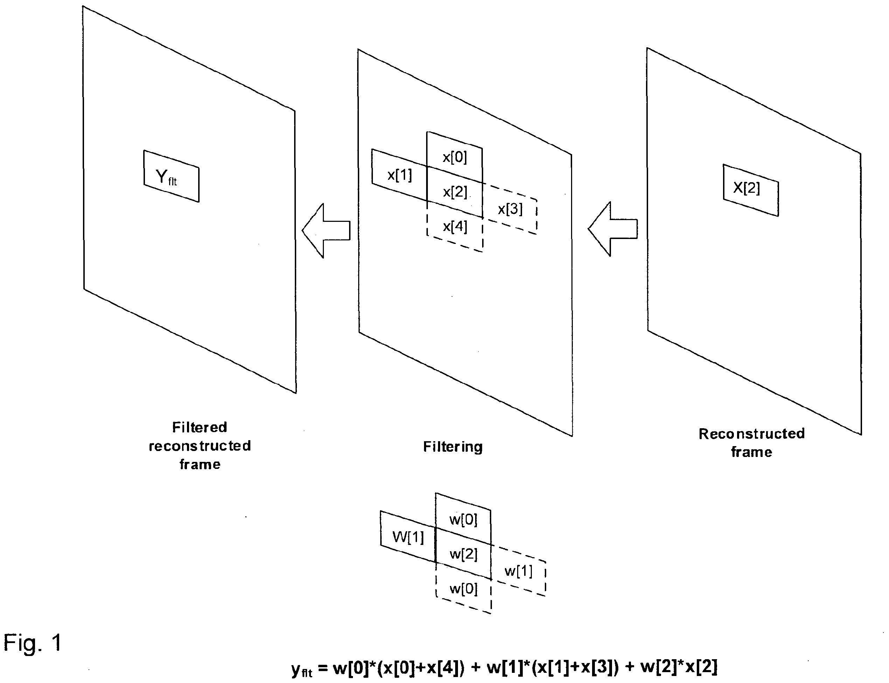

A conventional adaptive loop filter is described in Qian Chen, Yunfei Zheng, Peng Yin, Xiaoan Lu, Joel Sol'e, Qian Xu, Edouard Francois, and Dapeng Wu, "Classified Quadtree-based Adaptive Loop Filter", 2011 IEEE International Conference on Multimedia and Expo, Pages: 1 - 6. In this filter each reconstructed frame is divided into a set of small macro-blocks (super-pixels) and each macro-block is filtered by the adaptive loop filter in that each pixel of the filtered reconstructed frame is a weighted sum of several pixels in the connected area of the pixel from the reconstructed frame around the position of the generating filtered pixel. This filtering process is illustrated in figure 1. The pixels $x[0],x[1],x[2],x[3],x[4]$ from the reconstructed frame create a connected area of pixels which is used for filtering pixel $x[2]$ from this frame. The filtered pixel $y_{flt}$ is a weighted sum of the pixels $x[0]$, $x[1]$, ..., $x[4]$ and it is placed at the position of pixel $x[2]$ in the filtered reconstructed frame. The weighting coefficients (also referred to as filter coefficients) $w[0]$, $w[1]$, $w[2]$ have property of central symmetry and are transmitted from the encoder to the decoder side. These weighting coefficients are estimated on the encoder side based on the minimization of a squared error measure between the original and the filtered pixels. It can be shown that estimating the weighting coefficients in such a way increases the weighting coefficients for spatial pixel positions along edges in the reconstructed frame (ALF is an edge directed filter) and so it allows effectively suppressing quantization noise. Increasing the spatial filter size improves the quality of filtering due to the increased number of pixels used for averaging, but reduces the effect provided by the edge directed filtering, because in the case of a larger spatial area an edge often no longer is straight but becomes curved. This property of the conventional adaptive loop filter described above is a limitation for future improvements of filtering quality,

A further concept for in-loop filtering for video compression is disclosed in WO 2017/133660 A1 (MEDIATEK INC [CN]). Here a method for non-local means filtering is disclosed in which for each target block a patch group comprising K nearest reference blocks is determined and filtering is performed using a weighted sum of the pixels within the patch group.

A further concept for image denoising is disclosed in DABOV K ET AL: "Image Denoising by Sparse 3-D Transform-Domain Collaborative Filtering",IEEE TRANSACTIONS ON IMAGE PROCESSING, vol. 16, no. 8, 1 August 2007.

Thus, there is a need for an improved in-loop filter apparatus and method allowing to improve the prediction quality and, thus, increase the video coding efficiency.

SUMMARY

It is an object of the invention to provide an improved in-loop filter apparatus and method allowing to improve the prediction quality and, thus, increase the video coding efficiency.

The foregoing and other objects are achieved by the subject matter of the independent claims. Further implementation forms are apparent from the dependent claims, the description and the figures.

Generally, embodiments of the invention provide an in-loop filter for a lossy video codec which performs local and non-local filtering of a reconstructed frame. The reconstructed frame is divided into set of small overlapping or non-overlapping macro-blocks. For each base macro-block a set of spatial macro-blocks similar to the base macro-block is determined based on a block matching method. The found clusters of similar spatial blocks are reordered in descending order of similarity for generating of auxiliary or intermediate frames based on the order of similarity. It allows accumulating information about non-local correlations of pixels of the reconstructed frame in collocated pixels of auxiliary frames.More specifically, according to a first aspect the invention relates to an in-loop filter apparatus for video coding. The in-loop filter apparatus is configured for processing a reconstructed frame from a decoded reconstructed video stream for generating a filtered reconstructed frame, wherein the reconstructed frame comprises a plurality of pixels, each pixel being associated with a pixel value. The in-loop filter apparatus comprises a processing unit configured to: generate a set of overlapping or non-overlapping reference blocks of pixels from the reconstructed frame; determine for each reference block of pixels from the reconstructed frame a cluster of spatially or temporally similar blocks of pixels from the reconstructed frame or from another earlier decoded reconstructed frames provided, for instance, from a decoded pictures buffer on the basis of a similarity measure, wherein the cluster includes at least the reference block of pixels from the reconstructed frame; generate a set of auxiliary frames (also referred to as intermediate layers), including at least a first auxiliary frame and a second auxiliary frame, on the basis of the clusters corresponding to all reference blocks of pixels from the reconstructed frame; and generate a filtered reconstructed frame, wherein each pixel from the filtered reconstructed frame is a weighted sum of collocated pixels from auxiliary frames which are located around the position of the filtered pixel in the reconstructed frame.

Thus, an improved in-loop filter apparatus is provided allowing improving the efficiency for video coding. More specifically, the in-loop filter apparatus provided by embodiments of the invention is both a local and a non-local filter, i.e. it filters pixels in the local area around the filtering pixel as well as more remote pixels in non-local areas, which are similar to the pixels from the local area. Thus, compared to conventional in-loop filters the averaging over pixels can be improved. Employing auxiliary images or frames, which are generated on the basis of non-local pixel correlations allows achieving the same result as conventional in-loop filters, while using a smaller filter size. Moreover, a significantly more efficient filtering along edges is provided.

In a further possible implementation form of the first aspect, the processing unit is configured to determine for each reference block of pixels from the reconstructed frame the cluster of spatially or temporally similar blocks of pixels from the reconstructed frame or from another earlier decoded reconstructed frame on the basis of a block-matching method, wherein a search region defined for the block-matching method is located around the position of the reference block of pixels in the reconstructed frame.

In an implementation form the block matching method can be based on similarity measure using sum of absolute differences. All blocks with a similarity measure value larger than a threshold value can be selected.

In a further possible implementation form of the first aspect, the processing unit is configured to order or reorder similar blocks of pixels inside each cluster in the descending order of the similarity measure for generating the intermediate frames based on the order of the similarity measure such that after processing the first block of pixels in the cluster is the reference block, the second block of pixels in the cluster has the maximal similarity with the reference block, and the third block of pixels in the cluster has a similarity with the reference block that is smaller than the similarity between the first block and the reference block and larger than the similarity between the reference block and all following blocks in the ordered cluster.

In a further possible implementation form of the first aspect, the processing unit is configured for joint collaborative filtering of blocks of pixels similar to the reference block for each cluster before generating the intermediate frames and wherein the similar blocks of a cluster are replaced by the filtered similar blocks.

In a further possible implementation form of the first aspect, the processing unit is configured to generate the set of auxiliary frames, including at least the first auxiliary frame and the second auxiliary frame, on the basis of all clusters corresponding to all reference blocks from the reconstructed frame, wherein at least one cluster comprises more than one similar blocks of pixels, wherein:

the first auxiliary frame comprises all blocks of pixels from all the clusters corresponding to all reference blocks of pixels from the reconstructed frame and each block of pixels is located at the same respective position, which this block has in the reconstructed frame, such that for each block of pixels values of pixels from this block are added to corresponding pixels values from the first auxiliary frame, which already contain accumulated values of pixels from other blocks of pixels, wherein initially all values of pixels from the first auxiliary frame are equal to zero; and

the second auxiliary frame and further auxiliary frames respectively comprise all blocks of pixels from all the clusters corresponding to all reference blocks of pixels from the reconstructed frame and each block of pixels from current cluster is located at the respective position, which other block of pixels from the same ordered cluster has in the reconstructed frame, such that for each block of pixels the values of pixels from this block are added to corresponding pixels values from the second and/or further auxiliary frames, which already contain accumulated pixels values from other blocks of pixels, wherein initially all pixels values from the second and the further auxiliary frames are equal to zero.

In a further possible implementation form of the first aspect, the second auxiliary frame comprises all blocks of pixels from all the clusters corresponding to all reference blocks of pixels from the reconstructed frame and each block of pixels from the current cluster is located at the respective position, which the next block of pixels from the same ordered cluster has in the reconstructed frame.

In a further possible implementation form of the first aspect, a third auxiliary frame comprises all blocks of pixels from all the clusters corresponding to all reference blocks of pixels from the reconstructed frame and each block of pixels from the current cluster is located at the respective position, which the previous block of pixels from the same ordered cluster has in the reconstructed frame.

In a further possible implementation form of the first aspect, the processing unit is configured to use the respective position of the previous block of pixels from the current ordered cluster if the next block of pixels is absent in the ordered list of blocks from the current cluster and to use the respective position of the next block of pixels from the current ordered cluster if the previous block of pixels is absent in the ordered list of blocks from the current cluster.

In a further possible implementation form of the first aspect, a respective auxiliary frame other than the first auxiliary frame comprises all blocks of pixels from all the clusters corresponding to all reference blocks of pixels from the reconstructed frame and each block of pixels from the current cluster is located at the respective position, which other block of pixels, which is shifted with respect to the current block by a constant value in the ordered list of blocks of pixels in the same cluster, has in the reconstructed frame.

In a further possible implementation form of the first aspect, the (K - (Curr + Shift - K))-th block in the ordered list of blocks inside the current cluster is used if the (Curr + Shift)-th block is absent in the ordered list of blocks and wherein the (Shift - Curr)-th block in the ordered list of blocks inside the current cluster is used if the (Curr - Shift)-th block is absent in the ordered list of blocks, wherein Curr denotes the number of the current processing block in the ordered list, Shift denotes a constant shift corresponding to the auxiliary frame, and K denotes the number of blocks inside the current cluster.

In a further possible implementation form of the first aspect, the processing unit is configured to filter each pixel from the reconstructed frame on the basis of plurality of filtering pixels of the first auxiliary frame and a plurality of filtering pixels of the second auxiliary frame using a weighted sum of the filtering pixels of the first auxiliary frame and the filtering pixels of the second auxiliary frame, wherein the weighted sum is defined by a plurality of weight coefficients.

In a further possible implementation form of the first aspect, the filtering pixels of the first auxiliary frame and/or the filtering pixels of the second auxiliary frame are located inside a square, a rectangle or a rhombus around the position of the filtering pixel in the reconstructed frame.

In a further possible implementation form of the first aspect, the processing unit is configured to use the same weight coefficients for pairs of filtering pixels of the first auxiliary frame, which are located symmetrically relative to a position of the generating filtered pixel in the filtered reconstructed frame, and/or for pairs of filtering pixels of the second auxiliary frame, which are located symmetrically relative to a position of the generating filtered pixel in the filtered reconstructed frame.

According to a second aspect the invention relates to an encoding apparatus for encoding a current frame from an input video stream, wherein the encoding apparatus comprises an in-loop filter apparatus according to the first aspect of the invention.

In a further possible implementation form of the second aspect, the processing unit of the in-loop filter apparatus is configured to filter the reconstructed frame on the basis of the set of auxiliary frames using a plurality of weighting coefficients and the encoding apparatus further comprises an encoding unit, for instance an entropy encoding unit configured to encode the weighting coefficients.

In a further possible implementation form of the second aspect, the processing unit is configured to determine the weighting coefficients based on the minimization of an average square error between values of pixels from the filtered reconstructed frame and values of pixels from an original frame.

In a further possible implementation form of the second aspect, the processing unit is configured to determine the weighting coefficients based on the following equations:

$$W = (X^T X)^{-1} X^T Orig$$
$$X = [\, X0 \quad X1 \quad ... \quad XP\,]$$

$$W = \begin{bmatrix} W0 \\ W1 \\ ... \\ WP \end{bmatrix} \qquad R = \begin{bmatrix} orig_1 * c_1 \\ orig_2 * c_2 \\ orig_3 * c_3 \\ ... \\ orig_L * c_L \end{bmatrix} \qquad Orig = \begin{bmatrix} orig_1 \\ orig_2 \\ orig_3 \\ ... \\ orig_L \end{bmatrix} \qquad C = \begin{bmatrix} c_1 \\ c_2 \\ c_3 \\ ... \\ c_L \end{bmatrix}$$

$$Y = XW$$

wherein X denotes a matrix of filtering pixels comprising a matrix X0 of filtering pixels from the first auxiliary frame, a matrix X1 of filtering pixels from the second auxiliary frame and a matrix XP of filtering pixels from the P-th auxiliary frame, W denotes a matrix of weighting coefficients comprising a matrix W0 of weighting coefficients used for pixels from the first auxiliary frame, a matrix W1 of weighting coefficients used for pixels from the second auxiliary frame and a matrix WP of weighting coefficients used for pixels from the P-th auxiliary frame, Y denotes a matrix of filtered pixels, Orig denotes a matrix of pixels from the original frame corresponding to the filtered pixels Y, C denotes a vector of counters, where the vector element $c_i$ denotes the number of pixels added to all auxiliary frames in the position corresponding to the original pixel $orig_i$, L denotes the number of pixels used for estimating the weighting coefficients, and P denotes the number of auxiliary frames.

According to a third aspect the invention relates to a decoding apparatus for decoding a current reconstructed frame from a received bitstream, wherein the decoding apparatus comprises an in-loop filter apparatus according to the first aspect.

In a further possible implementation form of the third aspect, the processing unit is configured to filter the pixels of the current reconstructed frame on the basis of the set of auxiliary frames using a plurality of weighting coefficients, wherein the decoding apparatus further comprises a decoding unit, for instance an entropy decoding unit configured to decode the weighting coefficients.

According to a fourth aspect the invention relates to an in-loop filtering method for processing a reconstructed frame from a decoded video stream for generation of a filtered reconstructed frame, wherein the reconstructed frame comprises a plurality of pixels, each pixel being associated with a pixel value. The in-loop filtering method comprises the following steps: generating a set of overlapping or non-overlapping reference blocks of pixels from the reconstructed frame; determining for each reference block of pixels from the reconstructed frame a cluster of spatially or temporally similar blocks of pixels from the reconstructed frame or from another earlier decoded reconstructed frame, provided for instance by the decoded pictures buffer, on the basis of a similarity measure, wherein the cluster includes at least the reference block of pixels from the reconstructed frame; generating a set of auxiliary frames i.e. intermediate layers, including at least a first auxiliary frame and a second auxiliary frame, on the basis of the clusters corresponding to all reference blocks of pixels from the reconstructed frame; and generating a filtered reconstructed frame, wherein each pixel from the filtered reconstructed frame is a weighted sum of collocated pixels from auxiliary frames which are located around the position of the filtered pixel in the reconstructed frame.

Thus, an improved in-loop filtering method is provided allowing improving the efficiency for video coding.

The in-loop filtering method according to the fourth aspect of the invention can be performed by the in-loop filter apparatus according to the first aspect of the invention. Further features of the in-loop filtering method according to the fourth aspect of the invention result directly from the functionality of the in-loop filter apparatus according to the first aspect of the invention and its different implementation forms described above.

According to a fifth aspect the invention relates to a computer program comprising program code for performing the method according to the fourth aspect when executed on a computer.

BRIEF DESCRIPTION OF THE DRAWINGS

Further embodiments of the invention will be described with respect to the following figures, wherein:

Fig. 1 shows a diagram illustrating an example of a filtering process implemented in a conventional in-loop filter apparatus for video coding;

Fig. 2 shows a diagram illustrating an example of an encoding apparatus according to an embodiment comprising an in-loop filter apparatus according to an embodiment;

Fig. 3 shows a diagram illustrating an example of a decoding apparatus according to an embodiment comprising an in-loop filter apparatus according to an embodiment;

Fig. 4 shows a diagram illustrating an example of an aspect of a filtering process implemented in an in-loop filter apparatus according to an embodiment;

Fig. 5 shows a diagram illustrating an example of a further aspect of a filtering process implemented in an in-loop filter apparatus according to an embodiment;

Fig. 6 shows a diagram illustrating an example of a further aspect of a filtering process implemented in an in-loop filter apparatus according to an embodiment;

Fig. 7 shows a diagram illustrating an example of a further aspect of a filtering process implemented in an in-loop filter apparatus according to an embodiment;

Fig. 8 shows a diagram illustrating an example of processing steps implemented in an encoding apparatus according to an embodiment comprising an in-loop filter apparatus according to an embodiment;

Fig. 9 shows a diagram illustrating an example of processing steps implemented in a decoding apparatus according to an embodiment comprising an in-loop filter apparatus according to an embodiment; and

Fig. 10 shows a flow diagram illustrating an example of steps of an in-loop filtering method according to an embodiment.

In the various figures, identical reference signs will be used for identical or functionally equivalent features.

DETAILED DESCRIPTION OF EMBODIMENTS

In the following description, reference is made to the accompanying drawings, which form part of the disclosure, and in which are shown, by way of illustration, specific aspects in which the invention may be placed. It is understood that other aspects may be utilized and structural or logical changes may be made without departing from the scope of the invention. The following detailed description, therefore, is not to be taken in a limiting sense, as the scope of the invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

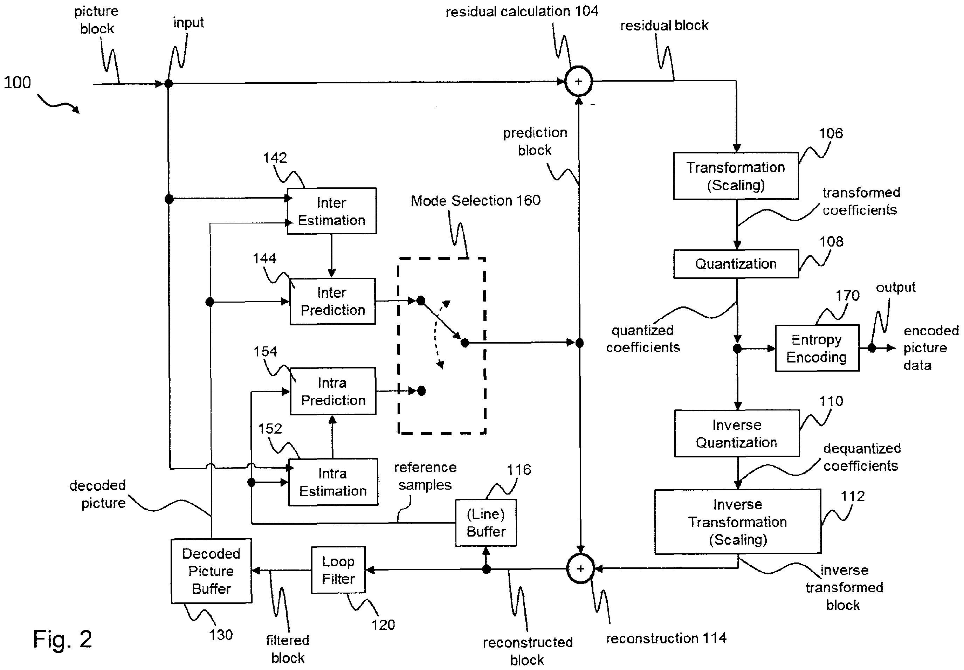

Figure 2 shows an encoding apparatus 100 according to an embodiment comprising an in-loop filter apparatus 120 according to an embodiment. The encoding apparatus 100 is configured to encode a block of a frame of a video signal comprising a plurality of frames (also referred to as pictures or images herein), wherein each frame is dividable into a plurality of blocks and each block comprises a plurality of pixels. In an embodiment, the blocks could be macro blocks, coding tree units, coding units, prediction units and/or prediction blocks.

In the exemplary embodiment shown in figure 2, the encoding apparatus 100 is implemented in the form of a hybrid video coding encoder. Usually, the first frame of a video signal is an intra frame, which is encoded using only intra prediction. To this end, the embodiment of the encoding apparatus 100 shown in figure 2 comprises an intra prediction unit 154 for intra prediction. An intra frame can be decoded without information from other frames. The intra prediction unit 154 can perform the intra prediction of a block on the basis of information provided by the intra estimation unit 152.

The blocks of subsequent frames following the first intra frame can be coded using inter or intra prediction, as selected by a mode selection unit 160. To this end, the encoding apparatus 100 shown in figure 2 further comprises an inter prediction unit 144. Generally, the inter prediction unit 144 can be configured to perform motion compensation of a block based on motion estimation provided by the inter estimation unit 142.

Furthermore, in the hybrid encoder embodiment shown in figure 2 a residual calculation unit 104 determines the difference between the original block and its prediction, i.e. the residual block defining the prediction error of the intra/inter picture prediction. This residual block is transformed by the transformation unit 106 (for instance using a DCT) and the transformation coefficients are quantized by the quantization unit 108. The output of the quantization unit 108 as well as the coding or side information provided, for instance, by the intra prediction unit 154, the inter prediction unit 144 and the in-loop filter apparatus 120 are further encoded by an entropy encoding unit 170.

A hybrid video encoder usually duplicates the decoder processing such that both will generate the same predictions. Thus, in the embodiment shown in figure 2 the inverse quantization unit 110 and the inverse transformation unit perform the inverse operations of the transformation unit 106 and the quantization unit 108 and duplicate the decoded approximation of the residual block. The decoded residual block data is then added to the results of the prediction, i.e. the prediction block, by the reconstruction unit 114. Then, the output of the reconstruction unit 114 can be provided to a line buffer 116 to be used for intra prediction and is further processed by the in-loop filter 120, which will be described in more detail below. The final picture is stored in the decoded picture buffer 130 and can be used for the inter prediction of subsequent frames.

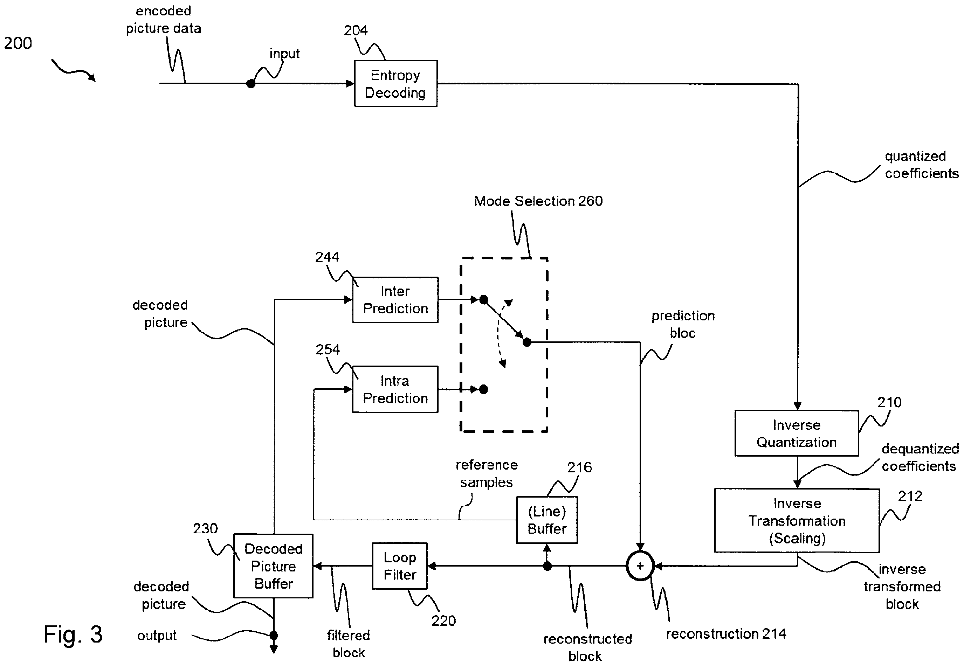

Figure 3 shows a decoding apparatus 200 according to an embodiment comprising an in-loop filter apparatus 220 according to an embodiment. The decoding apparatus 200 is configured to decode a block of a frame of an encoded video signal. In the embodiment shown in figure 3 the decoding apparatus 200 is implemented as a hybrid decoder. An entropy decoding unit 204 performs entropy decoding of the encoded picture data, which generally can comprise prediction errors (i.e. residual blocks), motion data and other side information, which are needed, in particular, for an intra prediction unit 254 and an inter prediction unit 244 as well as other components of the decoding apparatus 200, such as the in-loop filter apparatus 220. Generally, the intra prediction unit 254 and the inter prediction unit 244 of the decoding apparatus 200 shown in figure 3 are selected by a mode selection unit 260 and function in the same way as the intra prediction unit 154 and the inter prediction unit 144 of the encoding apparatus 100 shown in figure 1, so that identical predictions can be generated by the encoding apparatus 100 and the decoding apparatus 200. A reconstruction unit 214 of the decoding apparatus 200 is configured to reconstruct the block on the basis of the filtered predicted block and the residual block provided by the inverse quantization unit 210 and the inverse transformation unit 212. As in the case of the encoding apparatus 100, the reconstructed block can be provided to a line buffer 216 used for intra prediction and the filtered block/frame can be provided to a decoded picture buffer 230 by the in-loop filter apparatus 220 for inter prediction.

In the following further embodiments of the in-loop filter apparatus 120, 220, the encoding apparatus 100 and the decoding apparatus 200 will be described. In this context it will be understood that embodiments of the in-loop filter apparatus relate to embodiments of the in-loop filter apparatus 120 as implemented in the encoding apparatus 100 as well as embodiments of the in-loop filter apparatus 220 as implemented in the decoding apparatus 200.

As already described above, the in-loop filter apparatus 120, 220 is configured to process a reconstructed frame from a decoded reconstructed video stream for generating a filtered reconstructed frame. To this end, the in-loop filter apparatus 120, 220 comprises a processing unit. As will be explained in more detail below, the processing unit is configured to: generate a set of overlapping or non-overlapping reference blocks of pixels (also referred to as macro blocks) from the reconstructed frame; determine for each reference block of pixels from the reconstructed frame a cluster of spatially or temporally similar blocks of pixels from the reconstructed frame or from another previously decoded reconstructed frames (provided, for instance, from the decoded picture buffer 130, 230) on the basis of a similarity measure, wherein the cluster includes at least the reference block of pixels from the reconstructed frame; generate a set of auxiliary frames (also referred to as intermediate frames or layers), including at least a first auxiliary frame and a second auxiliary frame, on the basis of the clusters corresponding to all reference blocks of pixels from the reconstructed frame; and generate a filtered reconstructed frame, wherein each pixel from the filtered reconstructed frame is a weighted sum of collocated pixels from auxiliary frames which are located around the position of the filtered pixel in the reconstructed frame.

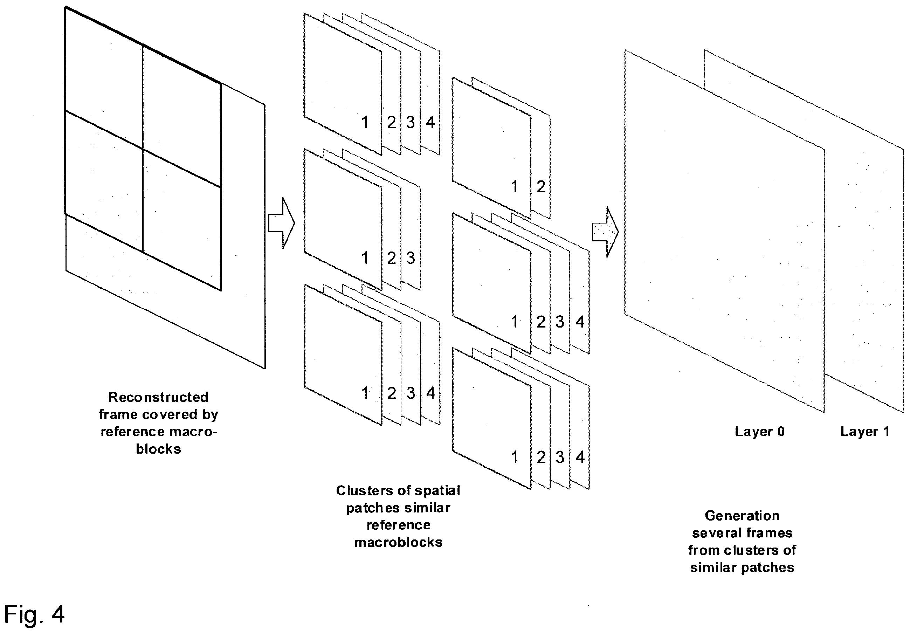

Figure 4 illustrates the generation of a set of overlapping or non-overlapping reference macro blocks, the generation of a cluster for each reference macro block and the generation of the set of auxiliary frames or layers performed by the processing unit of the in-loop filter apparatus 120, 220 in an exemplary embodiment. In this exemplary illustration bold lines illustrate the boundaries of reference blocks and thin lines illustrate the boundaries of blocks, which are similar to the reference block in each cluster. The number of blocks in each cluster can be different. For instance, in the exemplary embodiment shown in figure 4 the cluster at the top to the left has 4 blocks (including the corresponding reference block), whereas the cluster to the right thereof only has two blocks (including the corresponding reference block). Collocated pixels from the auxiliary frames or layers, which are build based on the cluster information, are similar to corresponding pixels from the reconstructed frame but include non-correlated noise in respect to each other. This allows using not only a local averaging inside each intermediate frame but also non-local averaging between collocated pixels in different intermediate frames.

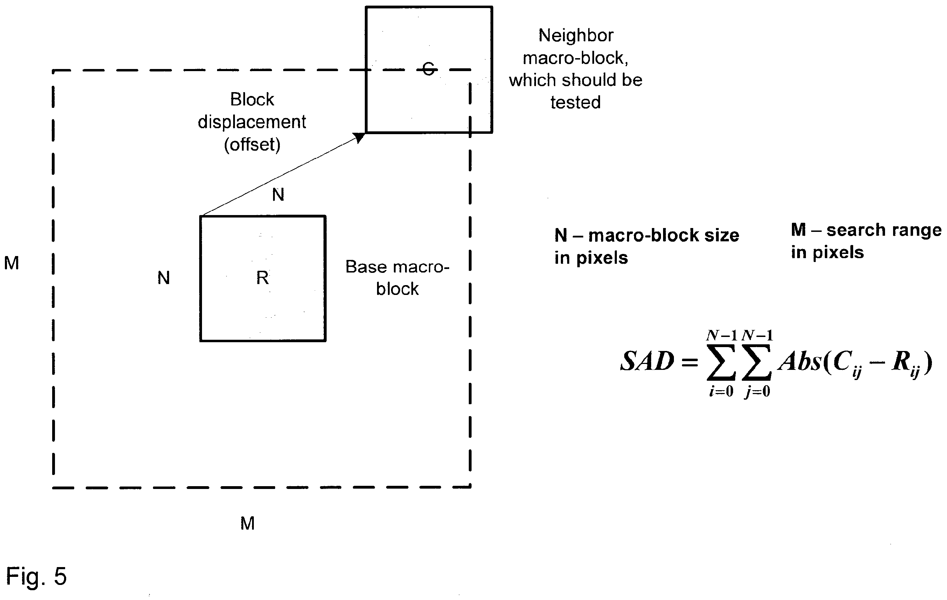

In an embodiment, the processing unit of the in-loop filter apparatus 120, 220 is configured to determine for each reference block of pixels from the reconstructed frame the cluster of spatially or temporally similar blocks of pixels from the reconstructed frame or from another frame (for instance another frame stored in the decoded picture buffer 130, 230) on the basis of a block-matching method, wherein a search region defined for the block-matching method is located around the position of the reference block of pixels in the reconstructed frame. In other words, according to an embodiment the block similarity is estimated based on a block-matching procedure, as illustrated in figure 5. For each reference block of the reconstructed frame and for each offset (displacement in respect to a respective reference block) the sum of absolute differences (SAD) between all pixels of the reference block and all pixels of shifted blocks can be calculated. Then k (k>=1) candidates with minimal SAD and SAD below a predefined threshold can be selected for generating a cluster of similar blocks.

In an embodiment, the processing unit of the in-loop filter apparatus 120, 202 is configured to reorder similar blocks of pixels inside each cluster in the descending order of the similarity measure (e.g. SAD) for generating the intermediate frames based on the order of the similarity measure, wherein after processing the first block of pixels in the cluster is the reference block, the second block of pixels in the cluster has the maximal similarity with the reference block, and the third block of pixels in the cluster has a similarity with the reference block that is smaller than the similarity between the first block and the reference block and larger than the similarity between the reference block and all following blocks in the ordered cluster.

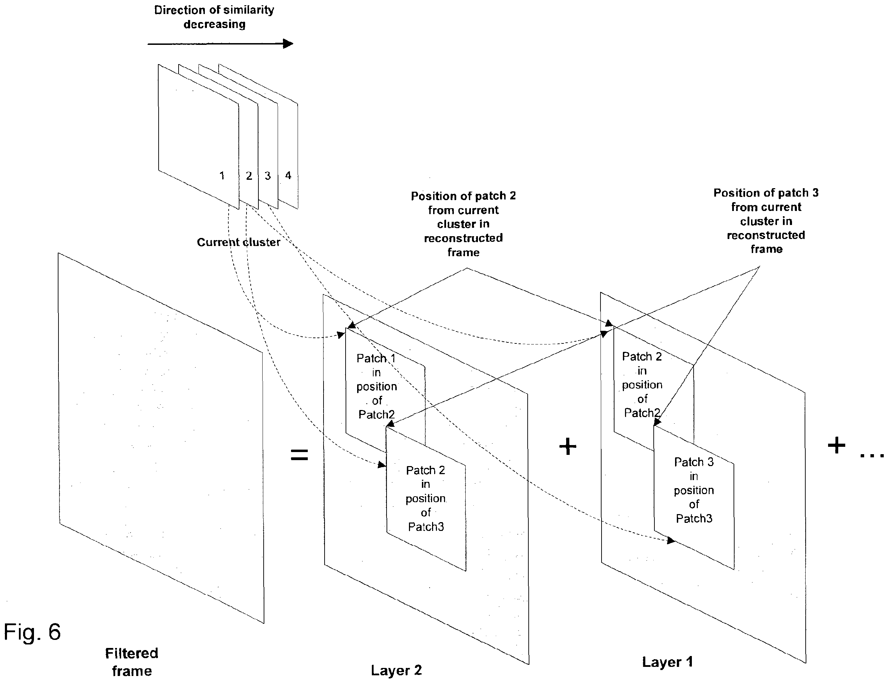

Figure 6 illustrates in more detail the generation of the set of auxiliary (or intermediate) frames or layers performed by the processing unit of the in-loop filter apparatus 120, 220 in an exemplary embodiment. Initially all intermediate frames can be initialized to zero. Then, all clusters corresponding to reference blocks of the reconstructed frame are processed consecutively one by one. Figure 6 illustrates the processing of one current cluster of the full set of clusters. Each pixel from each block of the current cluster is added to the corresponding pixel of the first auxiliary image or layer (i.e. layer 1) starting from the pixel position corresponding to the current block position in the reconstructed frame. In this manner, the first auxiliary frame (i.e. layer 1) comprises each block, i.e. all blocks, from the current cluster and this block is placed at the spatial position corresponding to its position in the reconstructed frame. For example, the pixels of a first similar block (referred to as patch 2 in figure 6) are added to the first auxiliary frame (i.e. layer 1) starting from the pixel position corresponding to the first pixel of patch 2 inside the reconstructed frame. Pixels from a second similar block (referred to as patch 3 in figure 6) are added to the first auxiliary frame (i.e. layer 1) starting from the pixel position corresponding to the first pixel of patch 3 within the reconstructed frame. The same operations are performed for further similar blocks, i.e. patches 1 and 4. By processing all clusters the first auxiliary frame will be generated.

For generating the second auxiliary frame each pixel from each block from the current cluster is added to a corresponding pixel from the second auxiliary frame (i.e. layer 2) starting from the pixel position corresponding to the position of the next similar block of a cluster in the reconstructed frame, i.e. "Next" here means the next block in the ordered list of similar blocks. In this manner, the second auxiliary frame (i.e. layer 2) comprises each block from each cluster and this block is placed at a spatial position in the reconstructed frame corresponding to the position of the next block in the ordered list of blocks of a cluster. For example, the block corresponding to patch 3 is next to the block corresponding to patch 2 in the ordered list of blocks of the current cluster so that patch 2 is added to the second auxiliary frame (i.e. layer 2) starting from the pixel position corresponding to first pixel of the block corresponding to patch 3 within the reconstructed frame. The block corresponding to patch 2 is next in respect to the block corresponding to patch 1 in the ordered list of blocks of the current cluster so that patch 1 is added to the second auxiliary frame (i.e. layer 2) starting from the pixel position corresponding to the first pixel of patch 2 within the reconstructed frame.

In an embodiment, in case there is no next block/patch in the ordered list of blocks of a current cluster, the previous block/patch position in the ordered list of blocks can be used as starting point for adding pixels to the auxiliary frames. If a current cluster includes only one block, then each pixel from this block should be added to corresponding pixels both auxiliary frames starting from a pixel position corresponding to the first pixel of this block within the reconstructed frame. By processing all clusters the second auxiliary frame (i.e. layer 2) is generated.

Thus, in an embodiment, the processing unit of the in-loop filter apparatus 120, 220 is configured to use the (K - (Curr + Shift - K))-th block in the ordered list of blocks inside the current cluster, if the (Curr + Shift)-th block is absent in the ordered list of blocks, and to use the (Shift - Curr)-th block in the ordered list of blocks inside the current cluster, if the (Curr - Shift)-th block is absent in the ordered list of blocks, wherein Curr denotes the number of the current processing block in the ordered list, Shift denotes a constant shift corresponding to the auxiliary frame, and K denotes the number of blocks inside the current cluster.

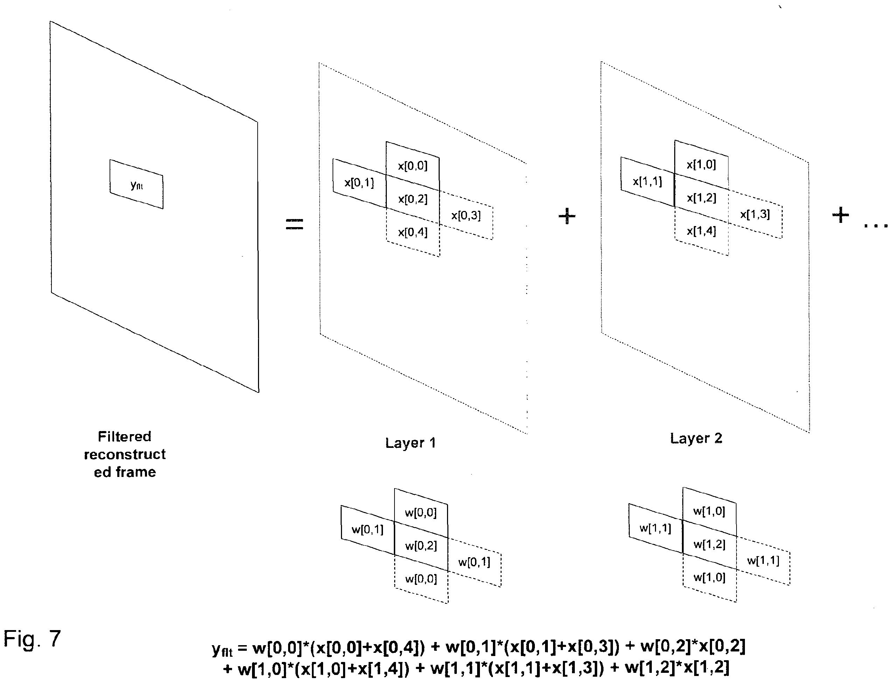

Figure 7 illustrates in more detail the generation of a filtered reconstructed frame by the processing unit of the in-loop filter apparatus 120, 220 on the basis of the auxiliary frames described above. As already described above, each pixel of the filtered reconstructed frame is a weighted sum of collocated pixels from auxiliary frames which are located around the position of the filtered pixel in the reconstructed frame. In the exemplary embodiment shown in figure 7 the pixels x[0,0], x[0,1], x[0,2], x[0,3], x[0,4] from the first auxiliary frame (i.e. layer 1) and the collocated pixels x[1,0], x[1,1], x[1,2], x[1,3], x[1,4] from the second auxiliary frame (i.e. layer 2) are used for filtering pixel x[2] from the reconstructed frame. The filtered pixel $y_{flt}$ is the weighted sum of the pixels x[0,0], x[0,1], ..., x[0,4] from the first auxiliary frame (i.e. layer 1) and the collocated pixels x[1,0], x[1,1], ..., x[1,4] from the second intermediate frame (i.e. layer 2). After averaging the filtered pixel is placed into the position of pixel x[2] into the filtered reconstructed frame. The weighting coefficients w[0,0], w[0,1], w[0,2] for the first auxiliary frame and w[1,0], w[1,1], w[1,2] for the second auxiliary frame have property of central symmetry and can be transmitted from the encoder 100 to the decoder 200. The number of auxiliary frames, which are used for filtering, can be more than two.

In an embodiment, the filtering pixels within the auxiliary frames defined a connected area of pixels in the collocated auxiliary frames. For example, this filtering area inside auxiliary frames can be rectangular, square or rhombus shaped around the position of the generating filtered pixel.

In an embodiment, the weighting coefficients can be estimated by the encoding apparatus 100 based on the minimization of the squared error between original and filtered pixels. For instance, a Wiener-Hopf method can be used for performing a minimization of this error in order to estimate the weighting coefficients. Thus, in an embodiment, the processing unit of the in-loop filter apparatus 120 of the encoding apparatus 100 is configured to determine the weighting coefficients based on the following equations:

$$\min_{W}((R-Y)\times(R-Y)^{T}$$

$$W = (X^{T}X)^{-1}X^{T}Orig$$

$$X = [|\quad X0 \quad X1 \quad ... \quad XP]$$

$$W = \begin{bmatrix} W0 \\ W1 \\ ... \\ WP \end{bmatrix} \qquad R = \begin{bmatrix} orig_1 * c_1 \\ orig_2 * c_2 \\ orig_3 * c_3 \\ ... \\ orig_L * c_L \end{bmatrix} \qquad Orig = \begin{bmatrix} orig_1 \\ orig_2 \\ orig_3 \\ ... \\ orig_L \end{bmatrix} \qquad C = \begin{bmatrix} c_1 \\ c_2 \\ c_3 \\ ... \\ c_L \end{bmatrix}$$

$$Y = XW$$

wherein X denotes a matrix of filtering pixels comprising a matrix X0 of filtering pixels from the first auxiliary frame, a matrix X1 of filtering pixels from the second auxiliary frame and a matrix XP of filtering pixels from the P-th auxiliary frame, W denotes a matrix of weighting coefficients comprising a matrix W0 of weighting coefficients used for pixels from the first auxiliary frame, a matrix W1 of weighting coefficients used for pixels from the second auxiliary frame and a matrix WP of weighting coefficients used for pixels from the P-th auxiliary frame, Y denotes a matrix of filtered pixels, Orig denotes a matrix of pixels from the original frame corresponding to the filtered pixels Y, C denotes a vector of counters, where the vector element $c_i$ denotes the number of pixels added to all auxiliary frames in the position corresponding to the original pixel $orig_i$, L denotes the number of pixels used for estimating the weighting coefficients, and P denotes the number of auxiliary frames.

For the exemplary embodiment shown in figure 6 these equations take on the following form:

$$X0 = [x[0,0]+x[0,4] \quad x[0,1]+x[0,3] \quad x[0,2]]$$

$$X1 = [x[1,0]+x[1,4] \quad x[1,1]+x[1,3] \quad x[1,2]]$$

$$W0 = \begin{bmatrix} w[0,0] \\ w[0,1] \\ w[0,2] \end{bmatrix} \qquad W1 = \begin{bmatrix} w[1,0] \\ w[1,1] \\ w[1,2] \end{bmatrix}$$

$$Y = [y_{flt}] \qquad R = [o[2] * c[2]]$$

wherein x[2] denotes the filtering pixel from the reconstructed frame (i.e. the position of this pixel in the reconstructed frame equals the position of x[0,2] in the first auxiliary frame and the position of x[1,2] in the second auxiliary frame), o[2] denotes the original pixel corresponding to pixel x[2] from the reconstructed frame, c[2] denotes the number of pixels, which were added to two auxiliary frames (i.e. the number of pixels added to the auxiliary frame 1 plus the number of pixels added to the auxiliary frame 2) into the position corresponding to pixel x[2] in the reconstructed frame, $y_{flt}$ denotes the filtered pixel, which should replace pixel x[2] from the reconstructed frame after filtering.

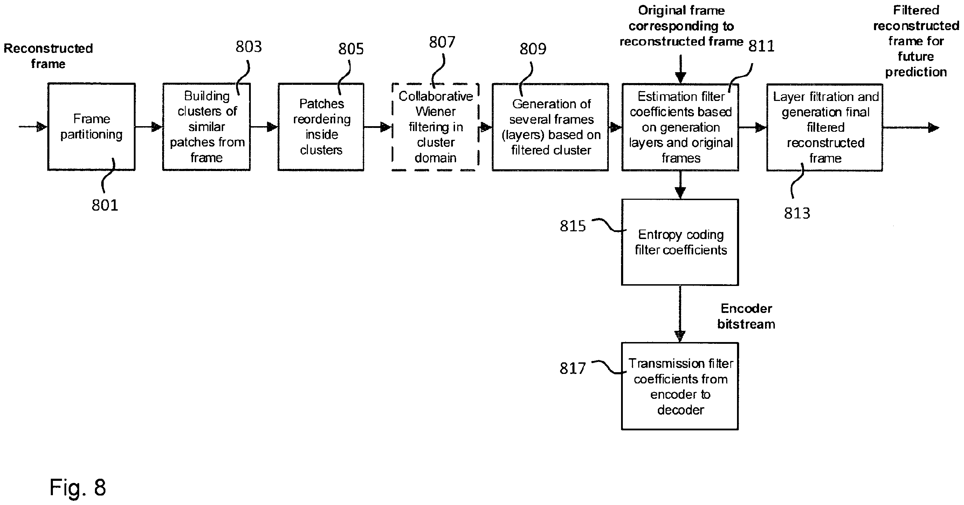

Figure 8 shows a diagram summarizing the processing steps implemented in the encoding apparatus 100 according to an embodiment comprising the in-loop filter apparatus 120 according to an embodiment. In an initial stage of processing the reconstructed frame is generated based on the predicted, transformed and quantized residual signal. In a next stage 801 a set of overlapping or non-overlapping reference (macro) blocks covering the reconstructed frame is generated. For each reference (macro) block a set, i.e. cluster of spatial similar blocks is created in a next stage 803 from the reconstructed frame or from earlier encoded/decoded frames from the decoded picture buffer 130. Different clusters can include a different number of spatially or temporally similar blocks. All blocks inside each cluster are reordered in the descending order of similarity for generating the auxiliary frames (layers) based on the order of similarity (stage 805). Before generating the auxiliary frames an additional collaborative filtering can be performed inside each cluster (stage 807). All similar blocks in this case are provided to the collaborative filter and all filtered patches are output by the collaborative filter. Then all clusters with filtered or non-filtered blocks are used for auxiliary frames generation (stage 809). During the next stage 811 multi-frame (multi-layer) weighting coefficients are estimated based on the minimization of the squared error between corresponding pixels from the filtered reconstructed frame and the original frame.

The so determined weighting coefficients are quantized and entropy encoded on the encoder side (stage 815) and inserted into an output bitstream for transferring this data from the encoder 100 to the decoder 200 (stage 817). On the last stage 813 of processing the auxiliary frames are filtered by the multi-layer filter using de-quantized weighting coefficients. Thereafter, the filtered reconstructed frame is placed in the decoded picture buffer 130 for future prediction.

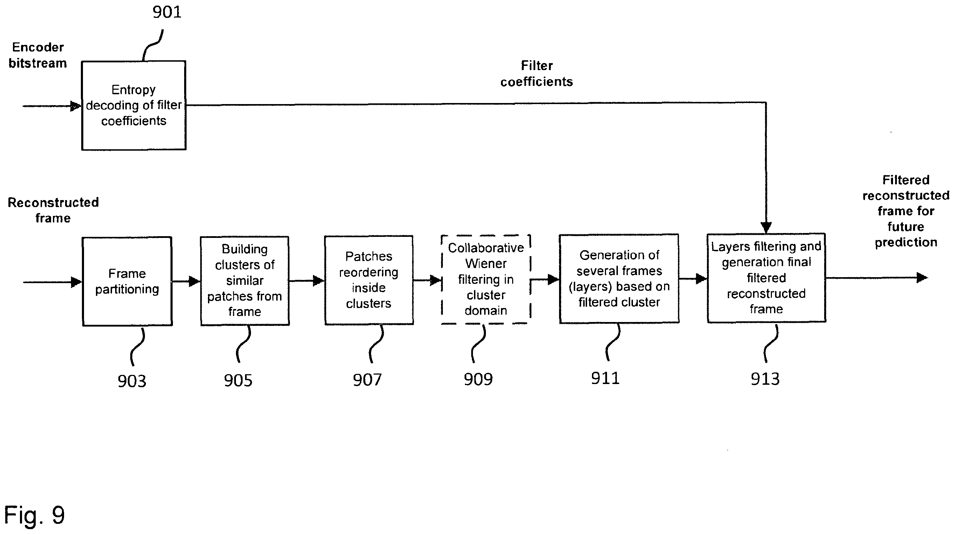

Figure 9 shows a diagram summarizing the processing steps implemented in the decoding apparatus 200 according to an embodiment comprising the in-loop filter apparatus 220 according to an embodiment. In a first stage 901 the decoder 200 extracts multi-layer weighting coefficients from the received bitstream and generates a reconstructed frame based on the prediction signal and the residual signal extracted from received bitstream. Then, the decoder 200 performs the same operation as the encoder 100, i.e. the decoder 200 generates the set of overlapping or non-overlapping reference (macro) blocks covering the reconstructed frame (stage 903) as well as the set of clusters of spatially or temporally similar blocks (stage 905). As on the encoder 100 side, all blocks inside each cluster are reordered in the descending order of similarity for generating the auxiliary frames (layers) based on the order of similarity and optionally are filtered by a collaborative filter before the generation of the auxiliary frames (stages 907, 909 and 911). During stage 913 the auxiliary frames are filtered by the multi-layer filter using the extracted weighting coefficients. The filtered reconstructed frame can be stored in the decoded picture buffer 230 for future prediction and is sent to the end user.

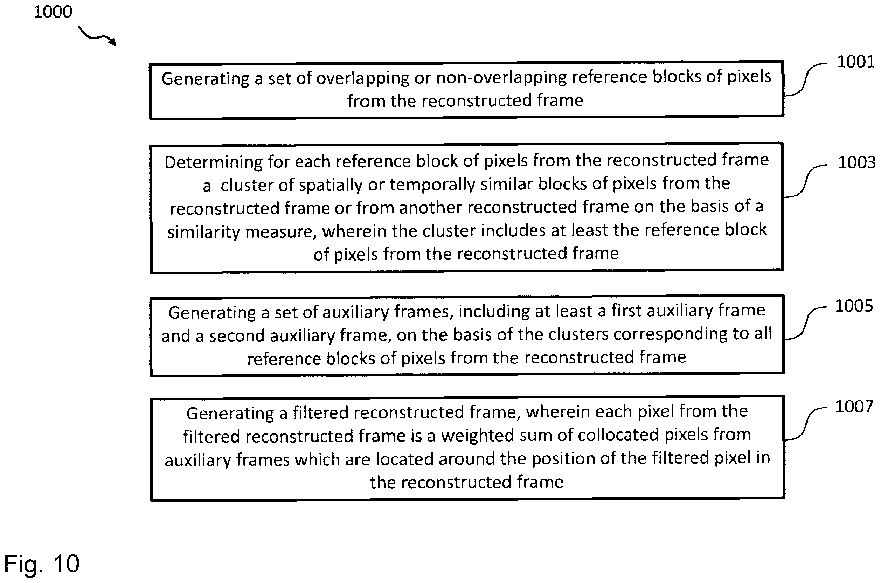

Figure 10 shows a flow diagram illustrating steps of a corresponding in-loop filtering method 1000 according to an embodiment. The method 1000 comprises the following steps: generating 1001 a set of overlapping or non-overlapping reference blocks of pixels from the reconstructed frame; determining 1003 for each reference block of pixels from the reconstructed frame a cluster of spatially or temporally similar blocks of pixels from the reconstructed frame or from another reconstructed frame on the basis of a similarity measure, wherein the cluster includes at least the reference block of pixels from the reconstructed frame; generating 1005 a set of auxiliary frames, including at least a first auxiliary frame and a second auxiliary frame, on the basis of the clusters corresponding to all reference blocks of pixels from the reconstructed frame; and generating 1007 a filtered reconstructed frame, wherein each pixel from the filtered reconstructed frame is a weighted sum of collocated pixels from auxiliary frames which are located around the position of the filtered pixel in the reconstructed frame.

The processing unit described above may be any kind of programmable or non-programmable hardware or software, or a combination of hardware and software, that is configured to carry out the above described coding operations. More specifically, the processing unit may be any kind of programmable or non-programmable circuitry that is capable of performing the operations. For example, the processing unit may comprise a processor and a non-transitory memory carrying executable instructions which when carried out by the processor cause the processor to perform the coding operations. While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal.

The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. An in-loop filter apparatus (120, 220) for video coding, wherein the in-loop filter apparatus (120, 220) is configured for processing a reconstructed frame from a decoded video stream for generation of a filtered reconstructed frame, wherein the reconstructed frame comprises a plurality of pixels, each pixel being associated with a pixel value, wherein the in-loop filter apparatus (120, 220) comprises:
a processing unit configured to:

   generate a set of overlapping or non-overlapping reference blocks of pixels from the reconstructed frame;
   determine for each reference block of pixels from the reconstructed frame a cluster of spatially or temporally similar blocks of pixels from the reconstructed frame or from another earlier decoded reconstructed frame on the basis of a similarity measure, wherein the cluster includes at least the reference block of pixels from the reconstructed frame;
   generate a set of auxiliary frames, including at least a first auxiliary frame and a second auxiliary frame, on the basis of the clusters corresponding to all reference blocks of pixels from the reconstructed frame; and
   generate a filtered reconstructed frame, wherein each pixel from the filtered reconstructed frame is a weighted sum of collocated pixels from auxiliary frames which are located around the position of the filtered pixel in the reconstructed frame;
   the processing unit is configured to reorder similar blocks of pixels inside each cluster in the descending order of the similarity measure for generating the intermediate frames based on the order of the similarity measure, wherein after processing the first block of pixels in the cluster is the reference block, the second block of pixels in the cluster has the maximal similarity with the reference block, and the third block of pixels in the cluster has a similarity with the reference block that is smaller than the similarity between the first block and the reference block and larger than the similarity between the reference block and all following blocks in the ordered cluster; and wherein the processing unit is configured to generate the set of auxiliary frames, including at least the first auxiliary frame and the second auxiliary frame, on the basis of all clusters corresponding to all reference blocks from the reconstructed frame, wherein at least one cluster comprises more than one similar blocks of pixels, wherein:
   the first auxiliary frame comprises all blocks of pixels from all the clusters corresponding to all reference blocks of pixels from the reconstructed frame and each block of pixels is located at the same respective position, which this block has in the reconstructed frame, such that for each block of pixels values of pixels from this block are added to corresponding pixels values from the first auxiliary frame, which already contain accumulated values of pixels from other blocks of pixels, wherein initially all values of pixels from the first auxiliary frame are equal to zero; and
   the second auxiliary frame and further auxiliary frames respectively comprise all blocks of pixels from all the clusters corresponding to all reference blocks of pixels from the reconstructed frame and each block of pixels from current cluster is located at the respective position, which other block of pixels from the same ordered cluster has in the reconstructed frame, such that for each block of pixels the values of pixels from this block are added to corresponding pixels values from the second and/or further auxiliary frames, which already contain accumulated pixels values from other blocks of pixels, wherein initially all pixels values from the second and the further auxiliary frames are equal to zero.

2. The in-loop filter apparatus (120, 220) of claim 1, wherein the processing unit is configured to determine for each reference block of pixels from the reconstructed frame the cluster of spatially or temporally similar blocks of pixels from the reconstructed frame or from another earlier decoded reconstructed frame on the basis of a block-matching method, wherein a search region defined for the block-matching method is located around the position of the reference block of pixels in the reconstructed frame.

3. The in-loop filter apparatus (120, 220) of any one of the preceding claims, wherein the second auxiliary frame comprises all blocks of pixels from all the clusters corresponding to all reference blocks of pixels from the reconstructed frame and each block of pixels from the current cluster is located at the respective position, which the next block of pixels from the same ordered cluster has in the reconstructed frame.

4. The in-loop filter apparatus (120, 220) of any one of the preceding claims, wherein a third auxiliary frame comprises all blocks of pixels from all the clusters corresponding to all reference blocks of pixels from the reconstructed frame and each block of pixels from the current cluster is located at the respective position, which the previous block of pixels from the same ordered cluster has in the reconstructed frame.

5. The in-loop filter apparatus (120, 220) of any one of the preceding claims, wherein the processing unit is configured to use the respective position of the previous block of pixels from the current ordered cluster if the next block of pixels is absent in the ordered list of blocks from the current cluster and to use the respective position of the next block of pixels from the current ordered cluster if the previous block of pixels is absent in the ordered list of blocks from the current cluster.

6. The in-loop filter apparatus (120, 220) of any one of the preceding claims, wherein the respective auxiliary frames other than the first auxiliary frame comprises all blocks of pixels from all the clusters corresponding to all reference blocks of pixels from the reconstructed frame and each block of pixels from the current cluster is located at the respective position, which other block of pixels, which is shifted by a constant value in the ordered list of blocks of pixels in the same cluster, has in the reconstructed frame.

7. The in-loop filter apparatus (120, 220) of any one of the preceding claims, wherein the (K - (Curr + Shift - K))-th block in the ordered list of blocks inside the current cluster is used if the (Curr + Shift)-th block is absent in the ordered list of blocks and wherein the (Shift - Curr)-th block in the ordered list of blocks inside the current cluster is used if the (Curr - Shift)-th block is absent in the ordered list of blocks, wherein Curr denotes the number of the current processing block in the ordered list, Shift denotes a constant shift corresponding to the auxiliary frame, and K denotes the number of blocks inside the current cluster.

8. The in-loop filter apparatus (120, 220) of any one of the preceding claims, wherein the processing unit is configured to filter each pixel from the reconstructed frame on the basis of plurality of filtering pixels of the first auxiliary frame and a plurality of filtering pixels of the second auxiliary frame using a weighted sum of the filtering pixels of the first auxiliary frame and the filtering pixels of the second auxiliary frame, wherein the weighted sum is defined by a plurality of weight coefficients.

9. The in-loop filter apparatus (120, 220) of claim 8, wherein the filtering pixels of the first auxiliary frame and/or the filtering pixels of the second auxiliary frame are located inside a square, a rectangle or a rhombus around the position of the filtering pixel in the reconstructed frame.

10. The in-loop filter apparatus (120, 220) of claim 9, wherein the processing unit is configured to use the same weight coefficients for pairs of filtering pixels of the first auxiliary frame, which are located symmetrically relative to a position of the generating filtered pixel in the filtered reconstructed frame, and/or for pairs of filtering pixels of the second auxiliary frame, which are located symmetrically relative to a position of the generating filtered pixel in the filtered reconstructed frame.

11. An encoding apparatus (100) for encoding a current frame from an input video stream, wherein the encoding apparatus (100) comprises an in-loop filter apparatus (120) according to any one of the preceding claims.

12. The encoding apparatus (100) of claim 11, wherein the processing unit is configured to filter the reconstructed frame on the basis of the set of auxiliary frames using a plurality of weighting coefficients and wherein the encoding apparatus (100) further comprises an encoding unit (170) configured to encode the weighting coefficients.

13. The encoding apparatus (100) of claim 11 or 12, wherein the processing unit is configured to determine the weighting coefficients based on the minimization of an average square error between values of pixels from the filtered reconstructed frame and values of pixels from an original frame.

**14.** The encoding apparatus (100) of claim 13, wherein the processing unit is configured to determine the weighting coefficients based on the following equations:

$$W = (X^T X)^{-1} X^T Orig$$

$$X = [ X0 \quad X1 \quad ... \quad XP]$$

$$W = \begin{bmatrix} W0 \\ W1 \\ ... \\ WP \end{bmatrix} \quad R = \begin{bmatrix} orig_1 * c_1 \\ orig_2 * c_2 \\ orig_3 * c_3 \\ ... \\ orig_L * c_L \end{bmatrix} \quad Orig = \begin{bmatrix} orig_1 \\ orig_2 \\ orig_3 \\ ... \\ orig_L \end{bmatrix} \quad C = \begin{bmatrix} c_1 \\ c_2 \\ c_3 \\ ... \\ c_L \end{bmatrix}$$

$$Y = XW$$

wherein X denotes a matrix of filtering pixels comprising a matrix X0 of filtering pixels from the first auxiliary frame, a matrix X1 of filtering pixels from the second auxiliary frame and a matrix XP of filtering pixels from the P-th auxiliary frame, W denotes a matrix of weighting coefficients comprising a matrix W0 of weighting coefficients used for pixels from the first auxiliary frame, a matrix W1 of weighting coefficients used for pixels from the second auxiliary frame and a matrix WP of weighting coefficients used for pixels from the P-th auxiliary frame, Y denotes a matrix of filtered pixels, Orig denotes a matrix of pixels from the original frame corresponding to the filtered pixels Y, C denotes a vector of counters, where the vector element $c_i$ denotes the number of pixels added to all auxiliary frames in the position corresponding to the original pixel $orig_i$, L denotes the number of pixels used for estimating the weighting coefficients, and P denotes the number of auxiliary frames.

**15.** A decoding apparatus (200) for decoding a current reconstructed frame from a received bitstream, wherein the decoding apparatus (200) comprises an in-loop filter apparatus (220) according to any one of claims 1 to 10.

**16.** The decoding apparatus (200) of claim 15, wherein the processing unit is configured to filter the pixels of the current reconstructed frame on the basis of the set of auxiliary frames using a plurality of weighting coefficients and wherein the decoding apparatus (200) further comprises a decoding unit (204) configured to decode the weighting coefficients.

**17.** An in-loop filtering method (1000) for processing a reconstructed frame from a decoded video stream for generation of a filtered reconstructed frame, wherein the reconstructed frame comprises a plurality of pixels, each pixel being associated with a pixel value, wherein the in-loop filtering method (1000) comprises:

generating (1001) a set of overlapping or non-overlapping reference blocks of pixels from the reconstructed frame;
determining (1003) for each reference block of pixels from the reconstructed frame a cluster of spatially or temporally similar blocks of pixels from the reconstructed frame or from another earlier decoded reconstructed frame on the basis of a similarity measure, wherein the cluster includes at least the reference block of pixels from the reconstructed frame;
generating (1005) a set of auxiliary frames, including at least a first auxiliary frame and a second auxiliary frame, on the basis of the clusters corresponding to all reference blocks of pixels from the reconstructed frame; and
generating (1007) a filtered reconstructed frame, wherein each pixel from the filtered reconstructed frame is a weighted sum of collocated pixels from auxiliary frames which are located around the position of the filtered pixel in the reconstructed frame;
reordering similar blocks of pixels inside each cluster in the descending order of the similarity measure for generating the intermediate frames based on the order of the similarity measure, wherein after processing the first block of pixels in the cluster is the reference block, the second block of pixels in the cluster has the maximal similarity with the reference block, and the third block of pixels in the cluster has a similarity with the reference block that is smaller than the similarity between the first block and the reference block and larger than the similarity between the reference block and all following blocks in the ordered cluster; and
generating the set of auxiliary frames, including at least the first auxiliary frame and the second auxiliary frame, on the basis of all clusters corresponding to all reference blocks from the reconstructed frame, wherein at least one cluster comprises more than one similar blocks of pixels, wherein:

the first auxiliary frame comprises all blocks of pixels from all the clusters corresponding to all reference blocks of pixels from the reconstructed frame and each block of pixels is located at the same respective position, which this block has in the reconstructed frame, such that for each block of pixels values of pixels from this block are added to corresponding pixels values from the first auxiliary frame, which already contain accumulated values of pixels from other blocks of pixels, wherein initially all values of pixels from the first auxiliary frame are equal to zero; and

the second auxiliary frame and further auxiliary frames respectively comprise all blocks of pixels from all the clusters corresponding to all reference blocks of pixels from the reconstructed frame and each block of pixels from current cluster is located at the respective position, which other block of pixels from the same ordered cluster has in the reconstructed frame, such that for each block of pixels the values of pixels from this block are added to corresponding pixels values from the second and/or further auxiliary frames, which already contain accumulated pixels values from other blocks of pixels, wherein initially all pixels values from the second and the further auxiliary frames are equal to zero.

18. A computer program product comprising program code for performing the method (1000) of claim 17 when executed on a computer or a processor.


**Patentansprüche**

1. Vorrichtung zur Filterung in einer Prädikationsschleife (120, 220) zur Videokodierung, wobei die Vorrichtung zur Filterung in einer Prädikationsschleife (120, 220) zur Verarbeitung eines rekonstruierten Frames aus einem dekodierten Video-Stream zur Erzeugung eines gefilterten rekonstruierten Frames konfiguriert ist, wobei der rekonstruierte Frame eine Vielzahl von Pixeln umfasst, wobei jedes Pixel einem Pixelwert zugeordnet ist, wobei die Vorrichtung zur Filterung in einer Prädikationsschleife (120, 220) umfasst:

eine Verarbeitungseinheit, die konfiguriert ist zum:

Erzeugen eines Satzes von überlappenden oder nicht überlappenden Referenzblöcken von Pixeln aus dem rekonstruierten Frame;

Bestimmen für jeden Referenz-Pixelblock aus dem rekonstruierten Frame einen Cluster von räumlich oder zeitlich ähnlichen Pixelblöcken aus dem rekonstruierten Frame oder aus einem anderen früher dekodierten rekonstruierten Frame auf der Grundlage eines Ähnlichkeitsmaßes, wobei der Cluster mindestens den Referenz-Pixelblock aus dem rekonstruierten Frame einschließt;

Erzeugen eines Satzes von Hilfsframes, der mindestens einen ersten Hilfsframe und einen zweiten Hilfsframe einschließt, auf der Grundlage der Cluster, die allen Referenzblöcken von Pixeln aus dem rekonstruierten Frame entsprechen; und

Erzeugen eines gefilterten rekonstruierten Frames, wobei jedes Pixel aus dem gefilterten rekonstruierten Frame eine gewichtete Summe von kollokierten Pixeln aus Hilfsframe ist, die sich um die Position des gefilterten Pixels in dem rekonstruierten Frame befinden;

wobei die Verarbeitungseinheit so konfiguriert ist, dass sie ähnliche Pixelblöcke innerhalb jedes Clusters in der absteigenden Reihenfolge des Ähnlichkeitsmaßes neu anordnet, um die Zwischenframe basierend auf der Reihenfolge des Ähnlichkeitsmaßes zu erzeugen, wobei nach der Verarbeitung der erste Pixelblock in dem Cluster der Referenzblock ist, der zweite Pixelblock in dem Cluster die maximale Ähnlichkeit mit dem Referenzblock aufweist und der dritte Pixelblock in dem Cluster eine Ähnlichkeit mit dem Referenzblock aufweist, die kleiner als die Ähnlichkeit zwischen dem ersten Block und dem Referenzblock und größer als die Ähnlichkeit zwischen dem Referenzblock und allen folgenden Blöcken in dem angeordneten Cluster ist; und

wobei die Verarbeitungseinheit so konfiguriert ist, dass sie den Satz von Hilfsframes, einschließlich mindestens des ersten Hilfsframes und des zweiten Hilfsframes, auf der Grundlage aller Cluster erzeugt, die allen Referenzblöcken aus dem rekonstruierten Frame entsprechen, wobei mindestens ein Cluster mehr als einen ähnlichen Pixelblock umfasst, wobei:

das erste Hilfsframe alle Pixelblöcke aus allen Clustern umfasst, die allen Referenzpixelblöcken aus dem rekonstruierten Frame entsprechen, und jeder Pixelblock sich an der gleichen jeweiligen Position befindet, die dieser Block in dem rekonstruierten Frame hat, so dass für jeden Pixelblockwerte von Pixeln aus diesem Block werden zu entsprechenden Pixelwerten aus dem ersten Hilfsframe addiert, die bereits akkumulierte Werte von Pixeln aus anderen Pixelblöcken enthalten, wobei anfänglich alle Werte von Pixeln aus dem ersten Hilfsframe gleich Null sind; und

das zweite Hilfsframe und weitere Hilfsframes umfassen jeweils alle Pixelblöcke aus allen Clustern, die allen Referenzpixelblöcken aus dem rekonstruierten Frame entsprechen, und jeder Pixelblock aus dem aktuellen Cluster befindet sich an der jeweiligen Position, von der der andere Pixelblock stammt derselbe geordnete Cluster hat in dem rekonstruierten Frame, so dass für jeden Pixelblock die Werte von Pixeln aus diesem Block zu entsprechenden Pixelwerten aus dem zweiten addiert werden und/oder weitere Hilfsframes, die bereits akkumulierte Pixelwerte aus anderen Pixelblöcken enthalten, wobei zunächst alle Pixelwerte aus dem zweiten und den weiteren Hilfsframes gleich Null sind.

2. Vorrichtung zur Filterung in einer Prädikationsschleife (120, 220) nach Anspruch 1, wobei die Verarbeitungseinheit so konfiguriert ist, dass sie für jeden Referenz-Pixelblock aus dem rekonstruierten Frame den Cluster räumlich oder zeitlich ähnlicher Pixelblöcke aus dem rekonstruierten Frame oder aus einem anderen, früher dekodierten, rekonstruierten Frame auf der Grundlage eines Block-Matching-Verfahrens bestimmt, wobei ein für das Block-Matching-Verfahren definierter Suchbereich um die Position des Referenz-Pixelblocks in dem rekonstruierten Frame herum angeordnet ist.

3. Vorrichtung zur Filterung in einer Prädikationsschleife (120, 220) nach einem der vorhergehenden Ansprüche, wobei der zweite Hilfsframe alle Pixelblöcke aus allen Clustern umfasst, die allen Referenz-Pixelblöcken aus dem rekonstruierten Frame entsprechen, und jeder Pixelblock aus dem aktuellen Cluster sich an der jeweiligen Position befindet, die der nächste Pixelblock aus demselben geordneten Cluster im rekonstruierten Frame hat.

4. Vorrichtung zur Filterung in einer Prädikationsschleife (120, 220) nach einem der vorhergehenden Ansprüche, wobei ein dritter Hilfsframe alle Pixelblöcke aus allen Clustern umfasst, die allen Referenz-Pixelblöcken aus dem rekonstruierten Frame entsprechen, und jeder Pixelblock aus dem aktuellen Cluster sich an der jeweiligen Position befindet, die der vorherige Pixelblock aus demselben geordneten Cluster im rekonstruierten Frame hat.

5. Vorrichtung zur Filterung in einer Prädikationsschleife (120, 220) nach einem der vorhergehenden Ansprüche, wobei die Verarbeitungseinheit so konfiguriert ist, dass sie die jeweilige Position des vorherigen Pixelblocks aus dem aktuellen geordneten Cluster verwendet, wenn der nächste Pixelblock in der geordneten Liste von Blöcken aus dem aktuellen Cluster nicht vorhanden ist, und dass sie die jeweilige Position des nächsten Pixelblocks aus dem aktuellen geordneten Cluster verwendet, wenn der vorherige Pixelblock in der geordneten Liste von Blöcken aus dem aktuellen Cluster nicht vorhanden ist.

6. Vorrichtung zur Filterung in einer Prädikationsschleife (120, 220) nach einem der vorhergehenden Ansprüche, wobei die jeweiligen Hilfsframes mit Ausnahme des ersten Hilfsframes alle Pixelblöcke aus allen Clustern umfassen, die allen Referenz-Pixelblöcken aus dem rekonstruierten Frame entsprechen, und jeder Pixelblock aus dem aktuellen Cluster sich an der jeweiligen Position befindet, die ein anderer Pixelblock, der um einen konstanten Wert in der geordneten Liste der Pixelblöcke in demselben Cluster verschoben ist, in dem rekonstruierten Frame hat.

7. Vorrichtung zur Filterung in einer Prädikationsschleife (120, 220) nach einem der vorhergehenden Ansprüche, wobei der (K - (Curr + Shift - K))-te Block in der geordneten Liste von Blöcken innerhalb des aktuellen Clusters verwendet wird, wenn der (Curr + Shift)-te Block in der geordneten Liste von Blöcken nicht vorhanden ist und wobei der (Shift - Curr)-te Block in der geordneten Liste von Blöcken innerhalb des aktuellen Clusters verwendet wird, wenn der (Curr - Shift)-te Block in der geordneten Liste von Blöcken nicht vorhanden ist, wobei Curr die Nummer des aktuellen Verarbeitungsblocks in der geordneten Liste bezeichnet, Shift eine konstante Verschiebung bezeichnet, die dem Hilfsframe entspricht, und K die Anzahl der Blöcke innerhalb des aktuellen Clusters bezeichnet.

8. Vorrichtung zur Filterung in einer Prädikationsschleife (120, 220) nach einem der vorhergehenden Ansprüche, wobei die Verarbeitungseinheit so konfiguriert ist, dass sie jedes Pixel aus dem rekonstruierten Frame auf der Grundlage einer Vielzahl von Filterpixeln des ersten Hilfsframes und einer Vielzahl von Filterpixeln des zweiten Hilfsframes unter Verwendung einer gewichteten Summe der Filterpixel des ersten Hilfsframes und der Filterpixel des zweiten Hilfsframes filtert, wobei die gewichtete Summe durch eine Vielzahl von Gewichtskoeffizienten definiert ist.

9. Vorrichtung zur Filterung in einer Prädikationsschleife (120, 220) nach Anspruch 8, wobei sich die Filterpixel des ersten Hilfsframes und/oder die Filterpixel des zweiten Hilfsframes innerhalb eines Quadrats, eines Rechtecks oder einer Raute um die Position des Filterpixels im rekonstruierten Frame befinden.

10. Vorrichtung zur Filterung in einer Prädikationsschleife (120, 220) nach Anspruch 9, wobei die Verarbeitungseinheit so konfiguriert ist, dass sie dieselben Gewichtungskoeffizienten für Paare von Filterpixeln des ersten Hilfsframes, die sich symmetrisch in Relation zu einer Position des erzeugenden gefilterten Pixels in dem gefilterten rekonstruierten Frame befinden, und/oder für Paare von Filterpixeln des zweiten Hilfsframes, die sich symmetrisch in Relation zu einer Position des erzeugenden gefilterten Pixels in dem gefilterten rekonstruierten Frame befinden, verwendet.

11. Kodiervorrichtung (100) zum Kodieren eines aktuellen Frames aus einem Video-Stream der Eingabe, wobei die Kodiervorrichtung (100) eine Vorrichtung zur Filterung in einer Prädikationsschleife (120) gemäß einem der vorhergehenden Ansprüche umfasst.

12. Kodiervorrichtung (100) nach Anspruch 11, wobei die Verarbeitungseinheit so konfiguriert ist, dass sie den rekonstruierten Frame auf der Grundlage des Satzes von Hilfsframes unter Verwendung einer Vielzahl von Gewichtungskoeffizienten filtert und wobei die Kodiervorrichtung (100) ferner eine Kodiereinheit (170) umfasst, die so konfiguriert ist, dass sie die Gewichtungskoeffizienten kodiert.

13. Kodiervorrichtung (100) nach Anspruch 11 oder 12, wobei die Verarbeitungseinheit so konfiguriert ist, dass sie die Gewichtungskoeffizienten basierend auf der Minimierung eines durchschnittlichen quadratischen Fehlers zwischen den Werten von Pixeln aus dem gefilterten rekonstruierten Frame und den Werten von Pixeln aus einem ursprünglichen Frame bestimmt.

14. Kodiervorrichtung (100) nach Anspruch 13, wobei die Verarbeitungseinheit so konfiguriert ist, dass sie die Gewichtungskoeffizienten basierend auf den folgenden Gleichungen bestimmt:

$$W = (X^T X)^{-1} X^T Orig$$

$$X = [|\ X0 \quad X1 \quad \cdots \quad XP]$$

$$W = \begin{bmatrix} W0 \\ W1 \\ \cdots \\ WP \end{bmatrix}$$

$$Y = XW$$

$$R = \begin{bmatrix} orig_1 *_{c_1} \\ orig_2 *_{c_2} \\ orig_3 *_{c_3} \\ \cdots \\ orig_L *_{c_L} \end{bmatrix} \quad Orig = \begin{bmatrix} orig_1 \\ orig_2 \\ orig_3 \\ \cdots \\ orig_L \end{bmatrix} \quad C = \begin{bmatrix} c_1 \\ c_2 \\ c_3 \\ \cdots \\ c_L \end{bmatrix}$$

wobei X eine Matrix von Filterpixeln bezeichnet, die eine Matrix X0 von Filterpixeln aus dem ersten Hilfsframe, eine Matrix X1 von Filterpixeln aus dem zweiten Hilfsframe und eine Matrix XP von Filterpixeln aus dem P-ten Hilfsframe umfasst, W eine Matrix von Gewichtungskoeffizienten bezeichnet, die eine Matrix W0 von Gewichtungskoeffizienten umfasst, die für Pixel aus dem ersten Hilfsframe verwendet werden, eine Matrix W1 von Gewichtungskoeffizienten, die für Pixel aus dem zweiten Hilfsframe verwendet werden, und eine Matrix WP von Gewichtungskoeffizienten, die für Pixel aus dem P-ten Hilfsframe verwendet werden, Y bezeichnet eine Matrix von gefilterten Pixeln, Orig bezeichnet eine Matrix von Pixeln aus dem ursprünglichen Frame, die den gefilterten Pixeln Y entsprechen, C bezeichnet einen Vektor von Zählern, wobei das Vektorelement $c_i$ die Anzahl von Pixeln bezeichnet, die zu allen Hilfsframes an der Position hinzugefügt werden, die dem ursprünglichen Pixel $Orig_i$ entspricht, L bezeichnet die Anzahl von Pixeln, die zur Schätzung der Gewichtungskoeffizienten verwendet werden, und P bezeichnet die Anzahl von Hilfsframes.

15. Dekodiervorrichtung (200) zum Dekodieren eines aktuellen rekonstruierten Frames aus einem empfangenen Bitstrom, wobei die Dekodiervorrichtung (200) eine Vorrichtung zur Filterung in einer Prädikationsschleife (220) gemäß einem der Ansprüche 1 bis 10 umfasst.

**16.** Dekodiervorrichtung (200) nach Anspruch 15, wobei die Verarbeitungseinheit so konfiguriert ist, dass sie die Pixel des aktuellen rekonstruierten Frames auf der Grundlage des Satzes von Hilfsframes unter Verwendung einer Vielzahl von Gewichtungskoeffizienten filtert und wobei die Dekodiervorrichtung (200) ferner eine Dekodiereinheit (204) umfasst, die so konfiguriert ist, dass sie die Gewichtungskoeffizienten dekodiert.

**17.** Verfahren zur Filterung in einer Prädikationsschleife (1000) zum Verarbeiten eines rekonstruierten Frames aus einem dekodierten Video-Stream zur Erzeugung eines gefilterten rekonstruierten Frames, wobei der rekonstruierte Frame eine Vielzahl von Pixeln umfasst, wobei jedes Pixel einem Pixelwert zugeordnet ist, wobei das Verfahren zur Filterung in einer Prädikationsschleife (1000) umfasst:

Erzeugen (1001) eines Satzes von überlappenden oder nicht überlappenden Referenzblöcken von Pixeln aus dem rekonstruierten Frame erzeugen;
Bestimmen (1003) für jeden Referenz-Pixelblock aus dem rekonstruierten Frame einen Cluster von räumlich oder zeitlich ähnlichen Pixelblöcken aus dem rekonstruierten Frame oder aus einem anderen früher dekodierten rekonstruierten Frame auf der Grundlage eines Ähnlichkeitsmaßes, wobei der Cluster mindestens den Referenz-Pixelblock aus dem rekonstruierten Frame einschließt;
Erzeugen (1005) eines Satzes von Hilfsframes, der mindestens einen ersten Hilfsframe und einen zweiten Hilfsframe einschließt, auf der Grundlage der Cluster, die allen Referenzblöcken von Pixeln aus dem rekonstruierten Frame entsprechen; und
Erzeugen (1007) eines gefilterten rekonstruierten Frames, wobei jedes Pixel aus dem gefilterten rekonstruierten Frame eine gewichtete Summe von kollokierten Pixeln aus Hilfsframe ist, die sich um die Position des gefilterten Pixels in dem rekonstruierten Frame befinden;
Neuordnen ähnlicher Pixelblöcke innerhalb jedes Clusters in der absteigenden Reihenfolge des Ähnlichkeitsmaßes, um die Zwischenframe basierend auf der Reihenfolge des Ähnlichkeitsmaßes zu erzeugen, wobei nach der Verarbeitung der erste Pixelblock in dem Cluster der Referenzblock ist, der zweite Pixelblock in dem Cluster die maximale Ähnlichkeit mit dem Referenzblock aufweist und der dritte Pixelblock in dem Cluster eine Ähnlichkeit mit dem Referenzblock aufweist, die kleiner als die Ähnlichkeit zwischen dem ersten Block und dem Referenzblock und größer als die Ähnlichkeit zwischen dem Referenzblock und allen folgenden Blöcken in dem angeordneten Cluster ist; und
Erzeugen des Satzes von Hilfsframes, einschließlich mindestens des ersten Hilfsframes und des zweiten Hilfsframes, auf der Grundlage aller Cluster, die allen Referenzblöcken aus dem rekonstruierten Frame entsprechen, wobei mindestens ein Cluster mehr als einen ähnlichen Pixelblock umfasst, wobei:

das erste Hilfsframe alle Pixelblöcke aus allen Clustern umfasst, die allen Referenzpixelblöcken aus dem rekonstruierten Frame entsprechen, und jeder Pixelblock sich an der gleichen jeweiligen Position befindet, die dieser Block in dem rekonstruierten Frame hat, so dass für jeden Pixelblockwerte von Pixeln aus diesem Block werden zu entsprechenden Pixelwerten aus dem ersten Hilfsframe addiert, die bereits akkumulierte Werte von Pixeln aus anderen Pixelblöcken enthalten, wobei anfänglich alle Werte von Pixeln aus dem ersten Hilfsframe gleich Null sind; und
das zweite Hilfsframe und weitere Hilfsframes umfassen jeweils alle Pixelblöcke aus allen Clustern, die allen Referenzpixelblöcken aus dem rekonstruierten Frame entsprechen, und jeder Pixelblock aus dem aktuellen Cluster befindet sich an der jeweiligen Position, von der der andere Pixelblock stammt derselbe geordnete Cluster hat in dem rekonstruierten Frame, so dass für jeden Pixelblock die Werte von Pixeln aus diesem Block zu entsprechenden Pixelwerten aus dem zweiten addiert werden und/oder weitere Hilfsframes, die bereits akkumulierte Pixelwerte aus anderen Pixelblöcken enthalten, wobei zunächst alle Pixelwerte aus dem zweiten und den weiteren Hilfsframes gleich Null sind.

**18.** Computerprogrammprodukt, das Programmcode zum Durchführen des Verfahrens (1000) nach Anspruch 17 umfasst, wenn es auf einem Computer oder einem Prozessor ausgeführt wird.

## Revendications

**1.** Appareil de filtrage en boucle (120, 220) de codage vidéo, dans lequel l'appareil de filtrage en boucle (120, 220) est configuré pour traiter une trame reconstruite à partir d'un flux vidéo décodé pour la génération d'une trame reconstruite filtrée, dans lequel la trame reconstruite comprend une pluralité de pixels, chaque pixel étant associé à une valeur de pixel, dans lequel l'appareil de filtrage en boucle (120, 220) comprend :
une unité de traitement configurée pour :

générer un ensemble de blocs de référence de pixels se chevauchant ou non à partir de la trame reconstruite ;

déterminer pour chaque bloc de référence de pixels de la trame reconstruite un groupe de blocs de pixels spatialement ou temporellement similaires de la trame reconstruite ou d'une autre trame reconstruite décodée antérieure sur la base d'une mesure de similarité, dans lequel la groupe comporte au moins le bloc de référence de pixels de la trame reconstruite ;

générer un ensemble de trames auxiliaires, comportant au moins une première trame auxiliaire et une deuxième trame auxiliaire, sur la base des groupes correspondant à tous les blocs de référence de pixels de la trame reconstruite ; et

générer une trame reconstruite filtrée, dans lequel chaque pixel provenant de la trame reconstruite filtrée est une somme pondérée de pixels colocalisés provenant de trames auxiliaires qui sont situées autour de la position du pixel filtré dans la trame reconstruite ;

l'unité de traitement est configurée pour réorganiser des blocs similaires de pixels à l'intérieur de chaque groupe dans l'ordre décroissant de la mesure de similarité pour générer les trames intermédiaires sur la base de l'ordre de la mesure de similarité, dans lequel après traitement, le premier bloc de pixels dans le groupe est le bloc de référence, le deuxième bloc de pixels dans le groupe a la similarité maximale avec le bloc de référence, et le troisième bloc de pixels dans le groupe a une similarité avec le bloc de référence qui est inférieure à la similarité entre le premier bloc et le bloc de référence et supérieure à la similarité entre le bloc de référence et tous les blocs suivants dans le groupe ordonné ; et

dans lequel l'unité de traitement est configurée pour générer l'ensemble de trames auxiliaires, comportant au moins la première trame auxiliaire et la deuxième trame auxiliaire, sur la base de tous les groupes correspondant à tous les blocs de référence de la trame reconstruite, dans lequel au moins un groupe comprend plus d'un bloc similaire de pixels, dans lequel :

la première trame auxiliaire comprend tous les blocs de pixels de tous les groupes correspondant à tous les blocs de pixels de référence de la trame reconstruite et chaque bloc de pixels est situé à la même position respective, que ce bloc a dans la trame reconstruite, de sorte que pour chaque bloc de pixels des valeurs de pixels de ce bloc sont ajoutées aux valeurs de pixels correspondantes de la première trame auxiliaire, qui contiennent déjà des valeurs cumulées de pixels d'autres blocs de pixels, dans lequel initialement toutes les valeurs de pixels de la première trame auxiliaire sont égales à zéro ; et

la deuxième trame auxiliaire et d'autres trames auxiliaires comprennent respectivement tous les blocs de pixels de tous les groupes correspondant à tous les blocs de référence de pixels de la trame reconstruite et chaque bloc de pixels du groupe actuel est situé à la position respective, lequel autre bloc de pixels du même groupe ordonné a dans la trame reconstruite, de sorte que pour chaque bloc de pixels les valeurs de pixels de ce bloc sont ajoutées aux valeurs de pixels correspondantes de la deuxième et/ou d'autres trames auxiliaires, qui contiennent déjà des valeurs de pixels accumulées provenant d'autres blocs de pixels, dans lequel initialement toutes les valeurs de pixels de la deuxième et des autres trames auxiliaires sont égales à zéro.

2. Appareil de filtrage en boucle (120, 220) selon la revendication 1, dans lequel l'unité de traitement est configurée pour déterminer pour chaque bloc de référence de pixels de la trame reconstruite le groupe de blocs de pixels spatialement ou temporellement similaires de la trame reconstruite ou à partir d'une autre trame reconstruite décodée antérieure sur la base d'un procédé de correspondance de blocs, dans lequel une région de recherche définie pour le procédé de correspondance de blocs est située autour de la position du bloc de référence de pixels dans la trame reconstruite.

3. Appareil de filtrage en boucle (120, 220) selon l'une quelconque des revendications précédentes, dans lequel la deuxième trame auxiliaire comprend tous les blocs de pixels de tous les groupes correspondant à tous les blocs de référence de pixels de la trame reconstruite et chaque bloc de pixels du groupe actuel est situé à la position respective que le bloc suivant de pixels du même groupe ordonné a dans la trame reconstruite.

4. Appareil de filtrage en boucle (120, 220) selon l'une quelconque des revendications précédentes, dans lequel une troisième trame auxiliaire comprend tous les blocs de pixels de tous les groupes correspondant à tous les blocs de référence de pixels de la trame reconstruite et chaque bloc de pixels du groupe actuel est situé à la position respective que le bloc de pixels précédent du même groupe ordonné a dans la trame reconstruite.

5. Appareil de filtrage en boucle (120, 220) selon l'une quelconque des revendications précédentes, dans lequel l'unité de traitement est configurée pour utiliser la position respective du bloc de pixels précédent à partir du groupe ordonné actuel si le bloc de pixels suivant est absent dans la liste ordonnée de blocs du groupe actuel et pour utiliser la position respective du bloc de pixels suivant du groupe ordonné actuel si le bloc de pixels précédent est absent de la liste ordonnée des blocs du groupe actuel.

6. Appareil de filtrage en boucle (120, 220) selon l'une quelconque des revendications précédentes, dans lequel les trames auxiliaires respectives autres que la première trame auxiliaire comprennent tous les blocs de pixels de tous les groupes correspondant à tous les blocs de référence de pixels de la trame reconstruite et chaque bloc de pixels du groupe actuel est situé à la position respective que l'autre bloc de pixels, qui est décalé d'une valeur constante dans la liste ordonnée de blocs de pixels dans le même groupe, a dans la trame reconstruite.

7. Appareil de filtrage en boucle (120, 220) selon l'une quelconque des revendications précédentes, dans lequel le (K - (Curr + Ctrl - K))-ème bloc dans la liste ordonnée des blocs à l'intérieur du groupe actuel est utilisé si le (Curr + Ctrl)-ème bloc est absent de la liste ordonnée des blocs et où le (Ctrl - Curr)-ème bloc dans la liste ordonnée des blocs à l'intérieur du groupe actuel est utilisé si le (Curr - Ctrl)-ème bloc est absent dans la liste ordonnée des blocs, où Curr désigne le numéro du bloc de traitement actuel dans la liste ordonnée, Ctrl désigne un décalage constant correspondant à la trame auxiliaire, et K désigne le nombre de blocs à l'intérieur du groupe actuel.

8. Appareil de filtrage en boucle (120, 220) selon l'une quelconque des revendications précédentes, dans lequel l'unité de traitement est configurée pour filtrer chaque pixel de la trame reconstruite sur la base d'une pluralité de pixels de filtrage de la première trame auxiliaire et d'une pluralité de pixels de filtrage de la deuxième trame auxiliaire utilisant une somme pondérée des pixels de filtrage de la première trame auxiliaire et des pixels de filtrage de la deuxième trame auxiliaire, dans lequel la somme pondérée est définie par une pluralité de coefficients de pondération.

9. Appareil de filtrage en boucle (120, 220) selon la revendication 8, dans lequel les pixels de filtrage de la première trame auxiliaire et/ou les pixels de filtrage de la deuxième trame auxiliaire sont situés à l'intérieur d'un carré, d'un rectangle ou d'un losange autour de la position du pixel de filtrage dans la trame reconstruite.

10. Appareil de filtrage en boucle (120, 220) selon la revendication 9, dans lequel l'unité de traitement est configurée pour utiliser les mêmes coefficients de pondération pour des paires de pixels de filtrage de la première trame auxiliaire, qui sont situées symétriquement par rapport à une position du pixel filtré générateur dans la trame reconstruite filtrée, et/ou pour des paires de pixels de filtrage de la deuxième trame auxiliaire, qui sont situées symétriquement par rapport à une position du pixel filtré générateur dans la trame reconstruite filtrée.

11. Appareil de codage (100) pour coder une trame actuelle à partir d'un flux vidéo d'entrée, dans lequel l'appareil de codage (100) comprend un appareil de filtrage en boucle (120) selon l'une quelconque des revendications précédentes.

12. Appareil de codage (100) selon la revendication 11, dans lequel l'unité de traitement est configurée pour filtrer la trame reconstruite sur la base de l'ensemble de trames auxiliaires en utilisant une pluralité de coefficients de pondération et dans lequel l'appareil de codage (100) comprend en outre une unité de codage (170) configurée pour coder les coefficients de pondération.

13. Appareil de codage (100) selon la revendication 11 ou 12, dans lequel l'unité de traitement est configurée pour déterminer les coefficients de pondération sur la base de la minimisation d'une erreur quadratique moyenne entre des valeurs de pixels provenant de la trame reconstruite filtrée et des valeurs de pixels provenant d'une trame originale.

14. Appareil de codage (100) selon la revendication 13, dans lequel l'unité de traitement est configurée pour déterminer les coefficients de pondération sur la base des équations suivantes :

$$W = (X^T X)^{-1} X^T Orig$$

$$X = [\, | \ X0 \quad X1 \quad \cdots \quad XP \,]$$

$$W = \begin{bmatrix} W0 \\ W1 \\ \cdots \\ WP \end{bmatrix}$$

$$Y = XW$$

$$R = \begin{bmatrix} orig_1 *_{c_1} \\ orig_2 *_{c_2} \\ orig_3 *_{c_3} \\ \cdots \\ orig_L *_{c_L} \end{bmatrix} \quad Orig = \begin{bmatrix} orig_1 \\ orig_2 \\ orig_3 \\ \cdots \\ orig_L \end{bmatrix} \quad C = \begin{bmatrix} c_1 \\ c_2 \\ c_3 \\ \cdots \\ c_L \end{bmatrix}$$

où X désigne une matrice de pixels de filtrage comprenant une matrice X0 de pixels de filtrage de la première trame auxiliaire, une matrice X1 de pixels de filtrage de la deuxième trame auxiliaire et une matrice XP de pixels de filtrage de la P-ième trame auxiliaire, W désigne une matrice de coefficients de pondération comprenant une matrice W0 de coefficients de pondération utilisée pour des pixels de la première trame auxiliaire, une matrice W1 de coefficients de pondération utilisée pour des pixels de la deuxième trame auxiliaire et une matrice WP de coefficients de pondération utilisée pour des pixels de la P-ième trame auxiliaire, Y désigne une matrice de pixels filtrés, Orig désigne une matrice de pixels de la trame d'origine correspondant aux pixels filtrés Y, C désigne un vecteur de compteurs, où l'élément vectoriel $c_i$ désigne le nombre de pixels ajoutés à toutes les trames auxiliaires dans la position correspondant au pixel d'origine $orig_i$, L désigne le nombre de pixels utilisés pour estimer les coefficients de pondération, et P désigne le nombre de trames auxiliaires.

15. Appareil de décodage (200) pour décoder une trame reconstruite actuelle à partir d'un flux binaire reçu, dans lequel l'appareil de décodage (200) comprend un appareil de filtrage en boucle (220) selon l'une quelconque des revendications 1 à 10.

16. Appareil de décodage (200) selon la revendication 15, dans lequel l'unité de traitement est configurée pour filtrer les pixels de la trame reconstruite actuelle sur la base de l'ensemble de trames auxiliaires en utilisant une pluralité de coefficients de pondération et dans lequel l'appareil de décodage (200) comprend en outre une unité de décodage (204) configurée pour décoder les coefficients de pondération.

17. Procédé de filtrage en boucle (1000) pour traiter une trame reconstruite à partir d'un flux vidéo décodé pour la génération d'une trame reconstruite filtrée, dans lequel la trame reconstruite comprend une pluralité de pixels, chaque pixel étant associé à une valeur de pixel, dans lequel le procédé de filtrage en boucle (1000) comprend :

la génération (1001) d'un ensemble de blocs de référence de pixels se chevauchant ou non à partir de la trame reconstruite ;
la détermination (1003) pour chaque bloc de référence de pixels de la trame reconstruite d'un groupe de blocs de pixels spatialement ou temporellement similaires de la trame reconstruite ou d'une autre trame reconstruite décodée antérieure sur la base d'une mesure de similarité, dans lequel la groupe comporte au moins le bloc de référence de pixels de la trame reconstruite ;
la génération (1005) d'un ensemble de trames auxiliaires, comportant au moins une première trame auxiliaire et une deuxième trame auxiliaire, sur la base des groupes correspondant à tous les blocs de référence de pixels de la trame reconstruite ; et
la génération (1007) d'une trame reconstruite filtrée, dans lequel chaque pixel provenant de la trame reconstruite filtrée est une somme pondérée de pixels colocalisés provenant de trames auxiliaires qui sont situées autour de la position du pixel filtré dans la trame reconstruite ;
la réorganisation de blocs similaires de pixels à l'intérieur de chaque groupe dans l'ordre décroissant de la mesure de similarité pour générer les trames intermédiaires sur la base de l'ordre de la mesure de similarité, dans lequel après traitement, le premier bloc de pixels dans le groupe est le bloc de référence, le deuxième bloc de pixels du groupe a la similarité maximale avec le bloc de référence, et le troisième bloc de pixels dans le groupe a une similarité avec le bloc de référence qui est inférieure à la similarité entre le premier bloc et le bloc de référence et supérieure à la similarité entre le bloc de référence et tous les blocs suivants dans le groupe ordonné ; et
la génération de l'ensemble de trames auxiliaires, comportant au moins la première trame auxiliaire et la deuxième trame auxiliaire, sur la base de tous les groupes correspondant à tous les blocs de référence de la trame reconstruite, dans lequel au moins un groupe comprend plus d'un bloc similaire de pixels, dans lequel :

la première trame auxiliaire comprend tous les blocs de pixels de tous les groupes correspondant à tous les blocs de pixels de référence de la trame reconstruite et chaque bloc de pixels est situé à la même position respective, que ce bloc a dans la trame reconstruite, de sorte que pour chaque bloc de pixels des valeurs de pixels de ce bloc sont ajoutées aux valeurs de pixels correspondantes de la première trame auxiliaire, qui contiennent déjà des valeurs cumulées de pixels d'autres blocs de pixels, dans lequel initialement toutes les valeurs de pixels de la première trame auxiliaire sont égales à zéro ; et
la deuxième trame auxiliaire et d'autres trames auxiliaires comprennent respectivement tous les blocs de pixels de tous les groupes correspondant à tous les blocs de référence de pixels de la trame reconstruite et chaque bloc de pixels du groupe actuel est situé à la position respective, lequel autre bloc de pixels du même groupe ordonné a dans la trame reconstruite, de sorte que pour chaque bloc de pixels les valeurs de pixels de ce bloc sont ajoutées aux valeurs de pixels correspondantes de la deuxième et/ou d'autres trames auxiliaires, qui contiennent déjà des valeurs de pixels accumulées provenant d'autres blocs de pixels, dans lequel initialement toutes les valeurs de pixels de la deuxième et des autres trames auxiliaires sont égales à zéro.

18. Produit de programme informatique comprenant un code de programme pour exécuter le procédé (1000) selon la revendication 17 lorsqu'il est exécuté sur un ordinateur ou un processeur.

Reconstructed frame

Filtering

Filtered reconstructed frame

$y_{flt} = w[0]*(x[0]+x[4]) + w[1]*(x[1]+x[3]) + w[2]*x[2]$

Fig. 1

Fig. 2

Fig. 3

encoded
picture data

input

204

Entropy
Decoding

200

quantized
coefficients

Mode Selection 260

244

Inter
Prediction

254

Intra
Prediction

decoded
picture

prediction
bloc

210

Inverse
Quantization

dequantized
coefficients

212

reference
samples

216

(Line)
Buffer

Inverse
Transformation
(Scaling)

230

Decoded
Picture
Buffer

decoded
picture

output

Loop
Filter

220

filtered
block

reconstructed
block

reconstruction 214

inverse
transformed
block

EP 3 698 542 B1

Fig. 4

Neighbor
macro-block,
which should be
tested

Block
displacement
(offset)

N

N

R

Base macro-
block

M

M

**N — macro-block size
in pixels**

**M — search range
in pixels**

$$SAD = \sum_{i=0}^{N-1} \sum_{j=0}^{N-1} Abs(C_{ij} - R_{ij})$$

EP 3 698 542 B1

Fig. 5

Fig. 6

Direction of similarity
decreasing

1  2  3  4

Current cluster

Position of patch 2
from current
cluster in
reconstructed
frame

Position of patch 3
from current
cluster in
reconstructed
frame

Patch 1
in
position
of
Patch2

Patch 2
in
position
of
Patch3

Patch 2
in
position
of
Patch2

Patch 3
in
position
of
Patch3

=

+

+ ...

Filtered
frame

Layer 2

Layer 1

**Filtered reconstructed frame**

**Layer 1**

**Layer 2**

Fig. 7

$$y_{flt} = w[0,0]*(x[0,0]+x[0,4]) + w[0,1]*(x[0,1]+x[0,3]) + w[0,2]*x[0,2]$$
$$+ w[1,0]*(x[1,0]+x[1,4]) + w[1,1]*(x[1,1]+x[1,3]) + w[1,2]*x[1,2]$$

Reconstructed frame → **Frame partitioning** 801 → **Building clusters of similar patches from frame** 803 → **Patches reordering inside clusters** 805 → [Collaborative Wiener filtering in cluster domain] 807 → **Generation of several frames (layers) based on filtered cluster** 809 → **Estimation filter coefficients based on generation layers and original frames** 811 → **Layer filtration and generation final filtered reconstructed frame** 813 → Filtered reconstructed frame for future prediction

Original frame corresponding to reconstructed frame 811

**Entropy coding filter coefficients** 815 → Encoder bitstream → **Transmission filter coefficients from encoder to decoder** 817

Fig. 8

EP 3 698 542 B1

**901**

**Encoder bitstream**

Entropy decoding of filter coefficients

**Filter coefficients**

**Reconstructed frame**

**Filtered reconstructed frame for future prediction**

| Frame partitioning | Building clusters of similar patches from frame | Patches reordering inside clusters | Collaborative Wiener filtering in cluster domain | Generation of several frames (layers) based on filtered cluster | Layers filtering and generation final filtered reconstructed frame |

903    905    907    909    911    913

Fig. 9

1000

EP 3 698 542 B1

Generating a set of overlapping or non-overlapping reference blocks of pixels from the reconstructed frame

1001

Determining for each reference block of pixels from the reconstructed frame a cluster of spatially or temporally similar blocks of pixels from the reconstructed frame or from another reconstructed frame on the basis of a similarity measure, wherein the cluster includes at least the reference block of pixels from the reconstructed frame

1003

Generating a set of auxiliary frames, including at least a first auxiliary frame and a second auxiliary frame, on the basis of the clusters corresponding to all reference blocks of pixels from the reconstructed frame

1005

Generating a filtered reconstructed frame, wherein each pixel from the filtered reconstructed frame is a weighted sum of collocated pixels from auxiliary frames which are located around the position of the filtered pixel in the reconstructed frame

1007

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017133660 A1

**Non-patent literature cited in the description**

- *Information technology - High efficiency coding and media delivery in heterogeneous environments - Part 2: High efficiency video coding,* November 2013
- **GARY J. SULLIVAN.** Overview of the High Efficiency Video Coding (HEVC) Standard. *IEEE Transactions on Circuits and Systems for Video Technology,* December 2012, vol. 22 (12
- **QIAN CHEN ; YUNFEI ZHENG ; PENG YIN ; XIAOAN LU ; JOEL SOL'E ; QIAN XU ; EDOUARD FRANCOIS ; DAPENG WU.** Classified Quadtree-based Adaptive Loop Filter. *2011 IEEE International Conference on Multimedia and Expo,* 1-6
- **DABOV K et al.** Image Denoising by Sparse 3-D Transform-Domain Collaborative Filtering. *IEEE TRANSACTIONS ON IMAGE PROCESSING,* 01 August 2007, vol. 16 (8